(19) Europäisches Patentamt
European Patent Office
Office européen des brevets

(11) EP 0 775 302 B1

(12) FASCICULE DE BREVET EUROPEEN

(45) Date de publication et mention
de la délivrance du brevet:
**18.12.2002 Bulletin 2002/51**

(51) Int Cl.⁷: **G01L 3/00**, G01M 15/00

(86) Numéro de dépôt international:
**PCT/FR96/00864**

(21) Numéro de dépôt: **96922077.1**

(22) Date de dépôt: **07.06.1996**

(87) Numéro de publication internationale:
**WO 96/042002 (27.12.1996 Gazette 1996/56)**

(54) **PROCEDE ET DISPOSITIF DE MESURE DU COUPLE D'UN MOTEUR THERMIQUE A COMBUSTION INTERNE**

VERFAHREN UND VORRICHTUNG ZUM MESSEN DES DREHMOMENTES EINES THERMISCHEN INTERNEN VERBRENNUNGSMOTORS

INTERNAL COMBUSTION ENGINE TORQUE MEASUREMENT DEVICE AND METHOD

(84) Etats contractants désignés:
**DE ES FR GB IT**

(30) Priorité: **08.06.1995 FR 9506780**
**08.06.1995 FR 9506781**

(43) Date de publication de la demande:
**28.05.1997 Bulletin 1997/22**

(73) Titulaire: **Renault s.a.s.**
**92100 Boulogne Billancourt (FR)**

(72) Inventeurs:
• **MOINE, Xavier**
**F-92500 Rueil-Malmaison (FR)**
• **TAUPIN, Jean-Marie**
**F-92140 Clamart (FR)**

(74) Mandataire: **Srour, Elie et al**
**Renault,**
**Département 00267**
**TCR AVA 0-56,**
**1, avenue du Golf**
**78288 Guyancourt Cedex (FR)**

(56) Documents cités:
EP-A- 0 463 537        EP-A- 0 532 419
FR-A- 2 189 734        US-A- 5 241 855
US-A- 5 259 241

**Description**

L'invention se rapporte à un procédé et à un dispositif de mesure du couple d'un moteur thermique à combustion interne et plus précisément à des perfectionnements au procédé et au dispositif de mesure d'un tel couple décrits dans le brevet français N° 91 11273 déposé par la demanderesse.

Dans ce brevet est décrit un dispositif pour produire une valeur numérique Cg représentative du couple gaz moyen engendré par chaque combustion du mélange gazeux dans les cylindres d'un moteur thermique fonctionnant à bas régime. Ce dispositif comprend :

- des repères de mesure disposés sur une couronne solidaire du volant d'inertie du moteur ou du vilebrequin ;
- des moyens pour définir au moins une référence d'indexation des repères ;
- un capteur de défilement des repères monté fixe au voisinage de la couronne ;
- des moyens de calcul pour produire une valeur numérique primaire $d_i$ représentative de la durée instantanée de défilement devant le capteur de chacun des repères ;
- des moyens de calcul pour élaborer à partir des valeurs numériques primaires $d_i$, une première valeur numérique secondaire T représentative de la durée totale de défilement devant le capteur de chaque série des n repères compris dans l'intervalle angulaire des combustions dans le moteur ;
- des moyens de calcul pour élaborer une seconde valeur numérique secondaire D, représentative de la projection sur une ligne de référence de phase des repères, correspondant à l'origine des périodes angulaires des combustions, de l'amplitude de la composante alternative des durées instantanées $d_i$ de défilement des repères devant le capteur, à la fréquence des combustions dans le moteur. La relation définissant D est :

$$D = \sum_{0}^{(n-1)} d_i . \cos(i.2\pi/n)$$

ci-après appelée relation initiale
- des moyens de calcul pour élaborer la valeur numérique recherchée Cg à partir de la relation $Cg = A.D/T^3 + B/T^2$, dans laquelle A et B sont des constantes déterminées expérimentalement.

A titre de variante, ce même brevet propose, pour diminuer les temps de calcul, de regrouper les n repères d'un intervalle angulaire des combustions en trois ou quatre paquets et de calculer le terme D visé plus haut à partir des durées de défilement de ces paquets devant le capteur.

Un premier objet de l'invention est de proposer un procédé et un dispositif de calcul simplifié du terme D, faisant appel à un petit nombre de paquets de repères et produisant un résultat sensiblement identique à celui fourni par le mode de calcul initial, tout en diminuant considérablement les nombres d'opérations mathématiques effectuées.

Un deuxième objet de l'invention est de proposer un procédé et un dispositif complémentaires soit du procédé de base décrit dans le brevet visé plus haut, soit du procédé et du dispositif selon le premier objet de la présente invention, pour mesurer les variations à basse fréquence du couple résistant appliqué au moteur afin de permettre d'affecter un facteur de qualité à la mesure de couple effectuée.

Un troisième objet de l'invention concerne un procédé et un dispositif dérivés des précédents, pour corriger les perturbations à basse fréquence subies par le couple moteur, notamment celles apportées par les oscillations du véhicule ou par les modifications soudaines de la charge.

Un quatrième objet de l'invention est de proposer un procédé et un dispositif pour effectuer une nouvelle correction intégrant les effets de la richesse du mélange du taux de recirculation des gaz d'échappement et des régimes transitoires du moteur. Cette nouvelle correction peut être combinée ou non avec les corrections précitées.

Selon le premier objet de l'invention, un procédé pour calculer d'une manière simplifiée le terme D visé plus haut consiste à :

- établir un horizon de mesure au moins égal à l'intervalle angulaire entre deux explosions consécutives dans le moteur ;
- regrouper les durées instantanées di de défilement des repères compris dans cet horizon de mesure en un nombre relativement petit de durées $du_0$, ..., $du_n$ de défilement de paquets de repères et affecter à ces durées du leur rang 0 ... n dans chaque horizon de mesure ;
- combiner ensemble, par addition et soustraction, éventuellement pondérées, un nombre de durées ayant des rangs déterminés, de manière à produire une grandeur Q ayant une réponse fréquentielle non-nulle à la fréquence d'analyse des explosions du moteur ;

- déterminer une constante de pondération telle que la réponse fréquentielle du terme D = p.Q, soit au moins pour ladite fréquence d'analyse et pour la combinaison des mesures retenue pour Q, identique à celle obtenue pour un terme D calculé par ladite relation initiale.

Selon une première forme de mise en oeuvre du procédé précédent, l'horizon de mesure correspondant exactement à l'intervalle angulaire séparant deux explosions consécutives dans le moteur, le nombre de paquets de repères étant six et les six durées mesurées, référencées $du_0$, ..., $du_5$, la grandeur Q = $(du_0 + du_5 - du_2 - du_3)$ et la constante p = $\pi/2\sqrt{3}$, lorsque les paquets de repères ont une même longueur angulaire $\pi/6$.

Grâce à ce mode de calcul simplifié, la valeur obtenue pour le terme D est sensiblement identique à celle initialement obtenue et cela bien que le nombre d'opérations arithmétiques à effectuer ait été ramené à quatre. Ceci réduit considérablement les spécifications du microprocesseur utilisé pour la réalisation des calculs. Par ailleurs, on notera dès à présent que les formes pratiques de mise en oeuvre des procédés selon l'invention sont déterminées par une analyse systématique des équivalents mathématiques de la relation initiale qui définit D.

Dans une deuxième forme de mise en oeuvre du procédé, l'horizon de mesure est égal à l'horizon précédemment défini, augmenté d'un paquet supplémentaire $du_6$, le terme Q valant alors Q = $du_0 - du_3 + 3/2.(du_6 - du_4)$. Cette deuxième forme a pour avantage de mieux discerner les combustions tardives des ratés de combustion du moteur.

Selon le deuxième objet de l'invention, un procédé pour mesurer les variations $\delta Cg$ du couple résistant appliqué à un moteur à deux ou quatre cylindres, consiste à :

- établir un horizon de mesure au moins égal à l'intervalle angulaire entre deux explosions consécutives dans le moteur ;
- regrouper les durées instantanées $d_i$ de défilement des repères compris dans cet horizon de mesure en un nombre relativement petit de durées $du_0$, ..., $du_{n'}$ de défilement de paquets de repères et identifier ces durées du par leur rang 0 ... n' dans chaque horizon de mesure en cours d'analyse, les valeurs angulaires des paquets des durées de rangs 0 et n' étant égales ;
- affecter la référence $du_{-1}$ à la durée du dernier paquet de repères du dernier horizon de mesure précédemment analysé et la référence $du_{+1}$ à la durée du premier paquet de repères du prochain horizon de mesure à analyser ;
- combiner quatre de ces données du suivant la relation q = $\delta u$ = $(du_0 - du_{-1} + du_{n'} - du_{+1})$ ;
- élaborer le terme $\delta Cg$ recherché suivant la relation $\delta Cg = a.q.A/T^3$, dans laquelle a est une nouvelle constante dépendant de la valeur angulaire des quatre paquets de repères concernés.

Selon une première forme de mise en oeuvre de ce procédé, la longueur angulaire de chaque paquet de repères est $\pi/6$ et la constante a = $\pi/2\sqrt{3}$.

Selon le troisième objet de l'invention, un procédé pour produire une valeur du terme D défini ci-dessus, corrigée des perturbations à basses fréquences affectant le moteur du fait des variations du couple résistant appliqué à ce moteur, consiste à calculer cette valeur selon la relation

$D_c$ = pQ + aq où a et p sont deux constantes éventuellement égales.

La mise en oeuvre de ce troisième procédé est particulièrement simple et efficace et cela résulte des considérations ci-après.

Le calcul du couple gaz moyen. Cg exprimé par la relation de base Cg = $A.D/T^3$ + $B/T^2$ demeure valable tant que la charge appliquée au moteur est découplée pour la fréquence d'analyse considérée. Or, aux bas régimes de rotation, la fréquence d'analyse se rapproche des fréquences d'oscillation de la charge. Dans le cas de fortes variations de charge (demande soudaine de couple, oscillations du véhicule sur mauvaise route, mise en résonance de la transmission), le calcul du couple gaz moyen est perturbé selon la relation :

Cg corrigé = Cg mesuré $-k.dC_c/d\theta$, avec $C_c$ le couple résistant appliqué au moteur (la charge) et k, une constante égale au rapport entre le couple gaz moyen et la composante du couple gaz instantané à la fréquence d'analyse. Dans le cas où l'horizon de mesure est un demi-tour ou un tour, les extrémités de cet horizon correspondent à des points morts pour tous les cylindres. Le couple exercé sur le vilebrequin par la pression régnant dans les cylindres est donc nul puisque les bras de levier sont nuls à cet instant. La charge appliquée au vilebrequin peut alors être calculée en mesurant l'accélération du volant autour de ces points morts.

Soient d- et d+, les durées correspondant à un angle $d_f$ de part et d'autre d'un point mort. La charge appliquée au volant vaut alors : $C_c$ = $J.\pi^3/d\theta^2.(d+ - d-)/T^3$, avec J l'inertie totale du volant et du vilebrequin. En appelant $C_{c-}$ et $C_{c+}$ les couples ainsi calculés respectivement au début et à la fin d'un horizon de mesure, la variation instantanée du couple de charge affectant le couple Cg mesuré est

$$\delta Cg = k. (C_{c+} - C_{c-})/\pi.$$

$$Cg \text{ corrigé} = Cg \text{ mesuré} - k.(C_{c+} - C_{c-})/\pi.$$

A partir des durées des paquets de longueur angulaire $\pi/6$ et, compte-tenu que le terme A de la relation définissant Cg et les termes k et J ci-dessus sont liés, la variation du couple de charge peut s'écrire avec une bonne précision :

$$\delta Cg = (\pi/2\sqrt{3}) \cdot (du_0 + du_5 - du_{-1} - du_{+1}) \cdot A/T^3.$$

Toute valeur non-nulle de ce terme $\delta Cg$ est un facteur affectant d'une manière négative la qualité de toute mesure Cg faite à cet instant.

A partir de la valeur de $\delta Cg$, on peut, en outre, directement appliquer une correction sur le terme D visé plus haut et écrire ($a = p = \pi/2\sqrt{3}$) :

$$D_c = P(Q+q) = \pi/2\sqrt{3} \cdot (2du_0 - du_{-1} - du_2 + 2du_5 - du_3 - du_{+1})$$

et

$$Cg_c = AD_c/T^3 + B/T^2.$$

Dans ces conditions, moyennant un calcul complémentaire simple, le couple gaz moyen corrigé $Cg_c$ calculé à partir du terme corrigé $Q_c$ est insensible aux variations à basse fréquence du couple résistant aussi longtemps que l'approximation de ce couple par une parabole demeure valable à l'intérieur de l'horizon de mesure. Cela est le cas aussi longtemps que la valeur du terme $\delta Cg$ demeure relativement faible, ce qui correspond à l'absence soit de fortes perturbations du couple résistant appliqué au moteur soit de brusques changements de grandes amplitudes affectant ce couple. Le terme $\delta Cg$ peut bien évidemment être produit indépendamment du terme D. Dans ce cas, il constitue un facteur négatif de qualité du couple Cg, quelle que soit la manière dont ce couple est calculé.

Selon le quatrième objet de l'invention, le procédé pour prendre en compte les conditions particulières de combustion affectant la détermination de la valeur numérique Cg du couple gaz moyen engendré par chaque combustion de mélange gazeux dans les cylindres d'un moteur thermique à quatre temps et quatre cylindres fonctionnant à bas régime, et pour corriger en conséquence cette valeur numérique, laquelle est exprimée par la relation $Cg = A. D/T^3 + B/T^2$, est caractérisé en ce qu'il consiste à :

- déterminer la masse d'air M pompée dans un cylindre au cours de la période de combustion d'un autre cylindre ;
- déterminer le couple de pompage Cp nécessaire à cet effet ;
- mémoriser ces deux données pendant les deux périodes de combustion suivantes ;
- combiner ces données pour produire un terme $H_{n'}$ de correction du couple $Cg_{n'}$ afférent à la période de combustion de rang n' selon la relation :

$$H_{n'} = -\delta \cdot (M_{n'-2} + M_{n'-1}) + \alpha.Cp_{n'-2} ;$$

dans laquelle $\delta$ et $\alpha$ sont des constantes dépendant du type de moteur, et
- calculer le couple gaz moyen corrigé, engendré au cours de la période de combustion de rang n', selon la relation $Cg_{cn'} = h.Cg_{n'} + H_{n'}$, dans laquelle h est une constante d'étalonnage dépendant du type de moteur.

Selon une caractéristique particulière du procédé selon l'invention :

- déterminer la masse d'air M consiste à mesurer la pression Pc dans le collecteur d'admission d'air du moteur et à calculer $M = Pc.R_N$, avec $R_N$ le coefficient sensiblement constant de remplissage des cylindres du moteur ;
- déterminer le couple de pompage Cp consiste à mesurer la pression atmosphérique Pa et à calculer $Cp = (Pc - Pa)$.

La mise en oeuvre de cette caractéristique particulière du procédé selon l'invention permet d'exprimer le terme $H_{n'}$ selon la relation :

$$H_{n'} = -\delta.R_N(Pc_{n'-2} + Pc_{n'-1}) + \alpha. (Pc_{n'-2} - Pa).$$

Grâce à ces dispositions, on réalise une correction de la mesure du couple d'un moteur à quatre temps et quatre cylindres, adaptée à un fonctionnement en mélange pauvre, à fort taux de recirculation des gaz d'échappement et/ou aux conditions transitoires du moteur (variation de l'angle papillon). L'ensemble de ces avantages résulte des considérations ci-après.

Le couple exercé par la pression des gaz sur le vilebrequin est la composée du couple exercé par le cylindre en détente et du couple exercé par le cylindre en compression. Dans le cas d'un cycle thermodynamique théorique, les deux couples de détente et de compression sont des adiabatiques, donc identiques à un facteur k près (k augmente lorsque l'énergie de combustion, donc la richesse augmente).

Dans le cas d'un moteur quatre temps à quatre cylindres, si $C_{comp} (\theta)$ représente le couple instantané exercé par le cylindre en compression, le couple exercé par le cylindre en détente vaut alors :

$$C_{dét} (\theta) = k.C_{comp} (\pi-\theta).$$

Le couple gaz est la somme du couple de détente, du couple de compression (négatif car résistant) et du couple de pompage. Pc étant la pression dans le collecteur d'admission et Pa la pression atmosphérique, on peut considérer que le couple de pompage est proportionnel à (Pc - Pa). Le couple gaz vaut donc :

$$C_{gaz} = C_{dét}-C_{comp} + \alpha. (Pc-Pa) = (k-1) . C_{comp}+\alpha. (c- Pa).$$

Dans le cas de l'estimation logicielle du couple Cg définie par la relation visée plus haut, la symétrie de la courbe des coefficients par rapport au plan milieu de l'horizon de mesure se transforme en courbe impaire vis-à-vis du couple. Il en résulte que le couple de compression résistant est vu comme un couple positif, au même titre que le couple de détente, par le procédé de mesure de Cg. La valeur mesurée du couple est :

$$Cg = A.D/T^3 + B/T^2 = \beta. (C_{comp} +C_{dét}).$$

Or, le couple de compression $C_{comp}$ peut être calculé à partir de la masse d'air introduite dans le cylindre, laquelle peut être déduite, soit d'une mesure débitmétrique soit d'une mesure de pression. Dans le cas de la pression, le couple de compression est proportionnel à la pression Pc dans le collecteur et au coefficient $R_N$ de remplissage du cylindre du moteur (lequel dépend du régime moteur) :

$$C_{comp} = \delta.R_N.Pc.$$

Dans le cas du couple gaz engendré, le couple $C_{comp}$ est le couple de compression du cylindre qui sera en détente au moment de la mesure (pression $Pc_{(n-2)}$) tandis que pour Cg le couple gaz mesuré, on mesure le couple $C_{comp}$ du cylindre en compression au moment de la mesure (pression $Pc_{(n-1)}$). En revanche, le coefficient de remplissage peut être le même pour les deux cylindres car le régime moteur varie peu. En combinant les équations ci-dessus, on obtient :

$$Cg_c = C_{dét} - C_{comp} + \alpha(Pc_{(n-2)} - Pa)$$

ou

$$Cg_c = h.Cg + H,$$

avec h, une constante d'étalonnage dépendant du type de moteur et :

$$H = \delta.R_N.(Pc_{(n-1)} + Pc_{(n-2)} + \alpha(Pc_{(n-2)} - Pa),$$

dans laquelle $\alpha = V/\pi$, avec V la cylindrée unitaire du moteur, $\delta = 1,14V$ en première approximation (avec k = 4,5) ajustable pour chaque type de moteur et $R_N$ le coefficient de remplissage du moteur, dépendant du régime mais égal à 1 en première approximation (il varie de 0,8 à 1,02 en fonction du régime croissant).

On rappellera que le terme $R_N.Pc$ représente la masse d'air introduite dans le cylindre. Il peut, en conséquence, être remplacé par un autre estimateur Da/N, avec Da le débit massique d'air dans le collecteur et N le nombre de tours par seconde du vilebrequin. De même, le terme (Pc - Pa) peut être remplacé par $(D.T - M_0)$ avec $M_0$, la masse d'air introduite dans un cylindre pour un papillon à pleine ouverture.

Les caractéristiques et avantages de l'invention ressortiront de manière plus précise de la description d'une forme de réalisation particulière de l'invention faite ci-après à titre d'exemple non limitatif, en référence aux dessins annexés dans lesquels :

- la figure 1 est un schéma des différents éléments constitutifs d'un dispositif de mesure selon l'invention ;
- la figure 2 représente les réponses fréquentielles de deux termes D respectivement calculés au moyen de la relation initiale et de la relation simplifiée ;
- la figure 3 représente quatre profils de réalisation et d'exploitation de durées de paquets de dents-repères.
- la figure 4 représente le schéma des différents éléments constitutifs d'une deuxième forme de réalisation d'un dispositif de mesure du couple d'un moteur selon l'invention ;
- la figure 5 représente le schéma des éléments spécifiques d'une troisième forme de réalisation de l'invention.

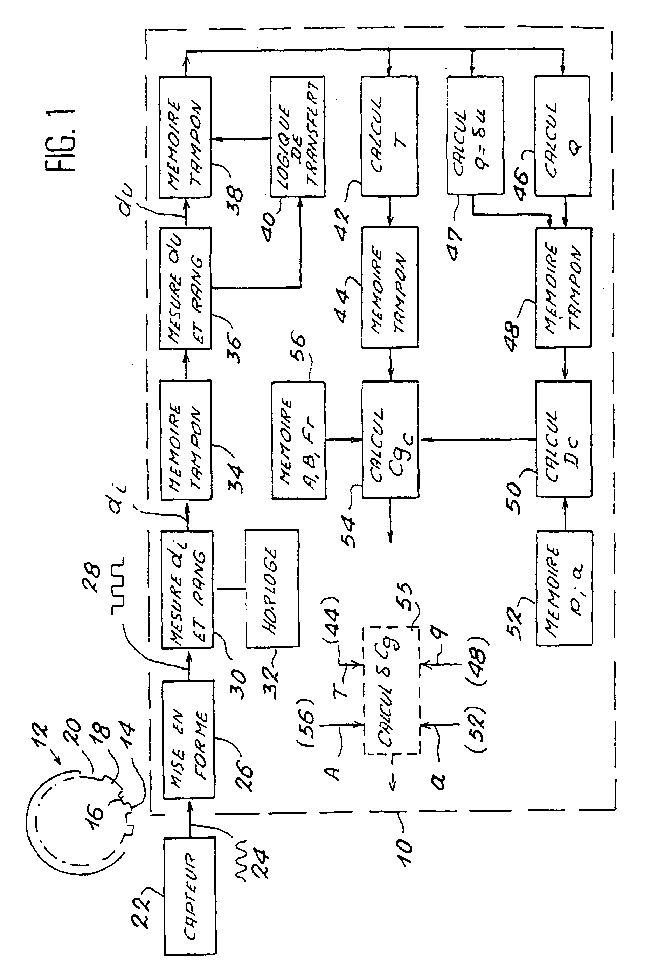

Selon la figure 1, est représenté un circuit 10 de mesure de couple gaz moyen $Cg_c$, corrigé des perturbations à basse fréquence produit par chaque combustion du mélange gazeux dans un moteur thermique à quatre temps et quatre cylindres, équipé d'une couronne de mesure dentée 12 solidaire du volant d'inertie d'un moteur à allumage électronique. A titre d'exemple, la couronne 12 comporte sur sa périphérie cinquante-six dents identiques régulièrement espacées telles celle formée par le plein 14 et le creux 16, réparties en deux séries de vingt-huit dents séparées par deux dents de référence diamétralement opposées, telles celle formée par le plein 18 et le creux 20, qui ont une largeur double de celle des autres dents. En fait, le couronne 12 comporte (2x28 + 2x2) = 60 repères équidistants constitués par des dents réelles ou virtuelles de même module. Les deux dents larges diamétralement opposées servent de référence ou d'origine d'indexation afin de permettre de numéroter chacune des dents et notamment d'identifier la dent $d_o$ qui sera définie ci-après.

Avec le moteur thermique à quatre temps et quatre cylindres visé dans l'exemple ci-dessus, on notera dès à présent que la période angulaire des combustions concerne trente dents et est égale à la moitié de la période de rotation du vilebrequin.

A la couronne 12 est associé un capteur fixe 22, par exemple à réluctance variable, adapté à délivrer un signal alternatif 24 de fréquence proportionnelle à la vitesse de défilement des dents de la couronne, c'est-à-dire proportionnelle à la vitesse instantanée du volant.

La position angulaire de ce capteur 22 par rapport aux dents d'indexation 18 au moment où le piston d'un cylindre est au point mort haut, est connue ou relevée. Cela permet d'identifier la dent $d_o$ comme'étant celle qui défile devant le capteur pendant le passage du piston du cylindre concerné à son point mort haut de combustion. Le signal délivré par le capteur 22 est appliqué à l'entrée d'un circuit de mise en forme 26 adapté à délivrer des signaux 28 à flancs raides, de période égale à la période instantanée $d_i$ des signaux incidents 24, l'indicé i variant de 0 à 29 au fur et à mesure que les dents défilent devant le capteur. Chaque période $d_i$ du signal ainsi produit correspond à la durée de passage d'une dent, soit un plein et un creux, devant le capteur 22. Pour ce qui concerne les signaux incidents produits par les dents de référence 18, le circuit de mise en forme 26 les transforme de la même façon en un signal à flancs raides, de durée exactement double de celle des signaux afférents aux autres dents. Les signaux 28 sont appliqués à un étage 30 de mesure et de calcul des périodes instantanées $d_i$ de défilement des dents réelles et virtuelles de la couronne de mesure 12 devant le capteur 22.

L'étage de mesure et de calcul 30 comprend des circuits de comptage qui reçoivent des impulsions chronométriques de fréquence élevée (10 MHz par exemple) produites par une horloge à quartz 32 et il délivre en sortie des valeurs numériques représentatives des nombres d'impulsions d'horloge comptées entre deux transitions creux-plein des signaux à flancs raides produits par l'étage de mise en forme 26. Pour ce qui est du traitement de chaque signal 28 produit par l'une des dents longues d'indexation 18-20 dans le cadre de l'exemple décrit, sa valeur sera divisée par deux (décalage d'un bit) et le résultat affecté aux deux dents virtuelles correspondantes. De la sorte, l'étage 30 de mesure et de calcul des périodes $d_i$ adresse à une mémoire-tampon 34 des séries successives de trente valeurs numériques $d_i$, respectivement associées à trente nombres consécutifs allant de 0 à 29 définissant le rang i de chacune des dents réelles ou virtuelles comprises dans un horizon de mesure.

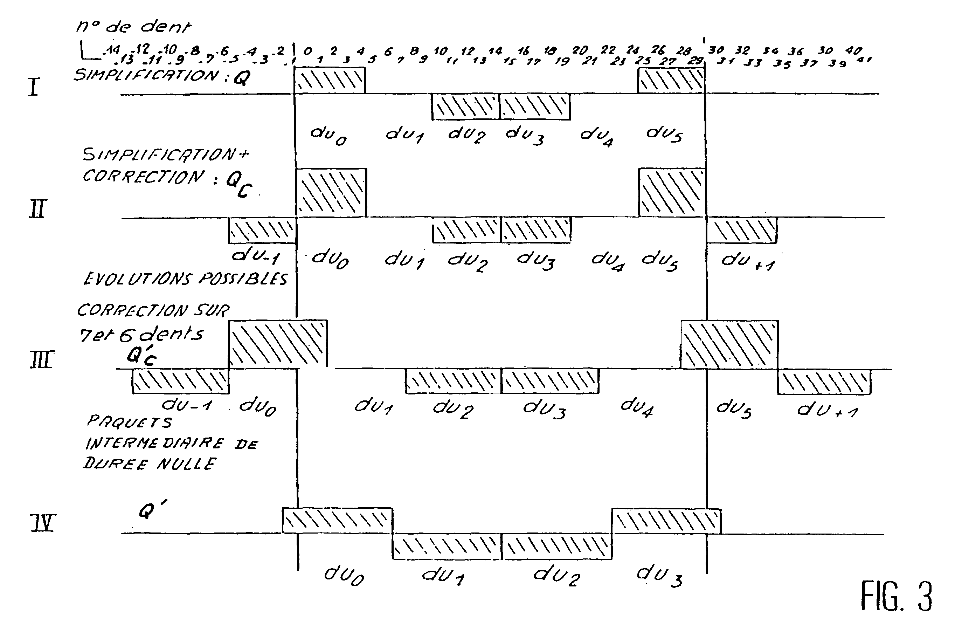

La mémoire-tampon 34 est connectée à un étage de calcul 36 adapté à regrouper par paquets de cinq les trente durées instantanées $d_i$ comprises entre deux dents de référence. De la sorte, l'étage 36 produit successivement six durées de défilement de paquets de cinq dents-repères, respectivement numérotées $du_0$, ..., $du_5$ au fur et à mesure de leur production. Ces six durées et leurs six numéros de rang sont représentés à la ligne I de la figure 3. Ces durées et ces numéros sont ensuite transmis à une mémoire tampon 38 placée sous le contrôle d'un étage de commande de transfert 40 adapté par ailleurs à recevoir les durées $du_0$, ..., $du_5$ et à identifier le rang de la durée $du_0$.

La mémoire-tampon 38 est adaptée à contenir trois suites successives de six durées de paquets-repères : une suite centrale qui définit l'horizon de mesure en cours d'analyse, une suite avant qui précède cette suite centrale dans le temps et une suite arrière qui la suit. A l'arrivée d'une nouvelle durée $du_0$, l'étage de commande de transfert 40 est adapté à transférer aux étages suivants les six durées référencées $du_0$, ..., $du_5$ de la suite centrale ainsi que, sous la référence $du_{-1}$, la durée $du_5$ du dernier paquet de la suite précédente et sous la référence $du_{+1}$, la durée $du_0$ du premier paquet de la suite qui vient d'arriver. Cela est représenté à la ligne II de la figure 3.

Un premier étage de calcul 42 qui reçoit ces huit durées successives est programmé pour sélectioner les six durées référencées $du_0$, ... $du_5$ et pour en calculer la somme, laquelle est la période instantanée T d'un intervalle angulaire des combustions. Chaque nouvelle valeur T ainsi calculée est adressée à une mémoire-tampon 44 où elle remplace la valeur précédemment calculée.

Un deuxième étage de calcul 46, qui reçoit ces huit durées successives ($du_{-1}$, $du_0$, ..., $du_5$, $du_{+1}$) est programmé pour sélectionner les quatre durées suivantes : $du_0$, $du_2$, $du_3$, $du_5$ et pour les combiner selon la relation représentée aux signes et pondérations à la ligne II de la figure 3 :

$$Q = (du_0 - du_2 + du_5 - du_3).$$

Un troisième étage de calcul 47 qui reçoit ces mêmes huit durées est programmé pour sélectionner les quatre durées $du_{-1}$, $du_0$, $du_5$ et $du_{+1}$ et pour les combiner suivant la relation $q = \delta u = (du_0 - du_{-1} + du_5 - du_{+1})$.

Les termes Q et q ainsi calculés sont adressés à une mémoire-tampon 48 dans laquelle ils demeurent jusqu'à l'arrivée de nouvelles valeurs de Q et q. La mémoire-tampon 48 est reliée à un quatrième étage de calcul 50 qui reçoit par ailleurs d'une mémoire 52, la constante de pondération $p = a = \pi/2.\sqrt{3}$. L'étage de calcul 50 est adapté à calculer la somme $Q_c = Q + q$ puis le produit $D_c = p \cdot Q_c$ et à l'appliquer à un cinquième étage de calcul 54.

Cet étage de calcul 54 reçoit en outre d'une mémoire 56, deux constantes A et B déterminées expérimentalement et, de la mémoire-tampon 44, le terme T. A partir de ces quatre grandeurs, l'étage 54 calcule le couple gaz moyen , corrigé des perturbations à basse fréquence, selon la relation $Cg_c = A.D_c/T^3 + B/T^2$. En conséquence de ce qui a été dit plus haut, on notera que cette valeur $Cg_c$ ainsi calculée n'est valable que pour les moteurs à deux ou quatre cylindres, dans lesquels les points morts hauts ou bas se produisent tous les tours ou tous les demi-tours de vilebrequin suivant qu'ils sont à deux temps ou à quatre temps. Pour des moteurs à six ou huit cylindres par exemple, la correction du couple gaz moyen vis-à-vis des perturbations à basse fréquence ne sera pas possible. Dans ce cas, la mémoire-tampon 38 sera limitée à une série de six paquets de dents-repères et l'étage de calcul 42 adapté à n'effectuer que le calcul de

$$Q = (du_0 - du_2 - du_3 + du_5).$$

Avec $Q_c = Q + q$, le couple gaz moyen corrigé $Cg_c$, calculé comme indiqué plus haut, comprend deux éléments, à savoir le couple Cg mesuré selon la relation simplifiée utilisant le terme

$$Q = (du_0 - du_2 - du_3 + du_5)$$

et une correction $\delta Cg$ à ce couple Cg ainsi mesuré, utilisant le terme

$$q = (du_0 - du\text{-}1 - du_{+1} + du_5).$$

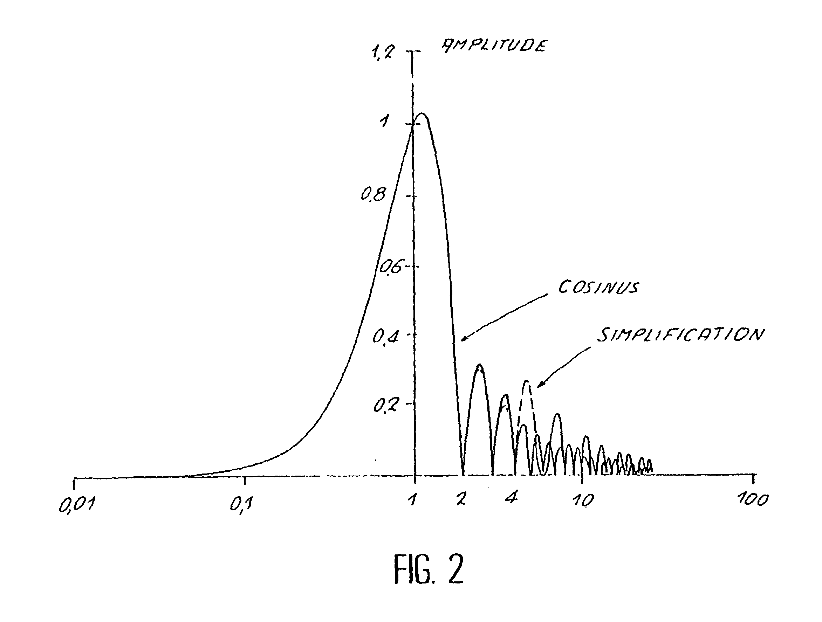

En conséquence, la précision de la mesure du couple Cg, effectuée à partir de la relation simplifiée utilisant le terme Q, se retrouve entièrement dans la mesure du couple $Cg_c$ corrigé des perturbations à basse fréquence. Par contre, il n'en est rien pour ce qui concerne des perturbations à des fréquences très supérieures à la fréquence des combustions. Pour ces perturbations à haute fréquence, ni le mode de calcul initial, ni le mode de calcul simplifié selon le premier objet de la présente invention ne permet de les corriger, le mode de calcul simplifié étant dans ce cas plus mauvais que le mode calcul initial. Ces différents résultats apparaissent clairement sur la figure 2 qui représente les réponses fréquentielles de deux termes D respectivement calculés selon les deux modes en question. En effet, ces réponses fréquentielles sont identiques jusqu'à quatre fois la fréquence d'un horizon de mesure $2\Omega o$ ($\Omega o$ étant la

fréquence de rotation d'un moteur à quatre temps et quatre cylindres). Au-delà, là réponse fréquentielle du terme D, obtenu par le mode de calcul simplifié, présente des maxima d'amplitude très supérieurs à ceux du terme D obtenus par le mode de calcul initial. Ce qui signifie que les perturbations à fréquences élevées sont davantage prises en compte par le mode de calcul simplifié que par le mode initial.

Conformément à cette figure 2 on vérifie que la grandeur Q a une fréquence fréquentielle non nulle à la fréquence d'analyse des explosions du moteur, et une réponse fréquentielle nulle à fréquence nulle, c'est-à-dire une valeur nulle pour une vitesse de rotation du moteur rigoureusement constante, ce qui est essentiel pour la qualité de l'approximation D = pQ.

Dans une variante de mise en oeuvre du procédé, l'horizon de mesure est égal à l'horizon précédemment défini, augmenté d'un paquet supplémentaire $du_6$, par exemple du + 1, le terme Q valant alors Q = $du_0$ - $du_3$ + 3/2. ($du_6$ - $du_4$). Cette deuxième forme a pour avantage de mieux discerner les combustions tardives des ratés de combustion du moteur.

Le terme q demeure fourni par la relation q = $\delta u$ = ($du_0$ - $du_{-1}$ + $du_5$ - $du_{+1}$), toutefois les constantes de pondération a et p utilisées pour le calcul de Dc sont alors différentes, a demeurant égale à $\pi/2\sqrt{3}$ et p prenant une valeur déterminée expérimentalement.

Comme cela a été dit dans le préambule de la présente description, la formule utilisée pour le calcul du couple gaz moyen, à savoir Cg = A.D/$T^3$ + B/$T^2$ n'est valable que pour des moteurs fonctionnant à bas régimes. Dans le cas d'un moteur fonctionnant à haut régime, une correction doit être apportée au coefficient A en question, comme cela est indiqué dans le brevet visé dans ce préambule. Pour ce faire, le coefficient A est remplacé par $A_c$ = A(1 - z) avec z = $(fi/fr)^2$. Dans cette relation fi = 1/T, la fréquence instantanée des combustions et fr est la fréquence de résonance en torsion, de la liaison vilebrequin/volant d'inertie. Pour mettre en oeuvre cette correction dans le cadre de la présente invention, la mémoire 56 contiendra le terme constant fr et l'étage de calcul 54 calculera fi = 1/T puis z = $(fi/fr)^2$ puis $A_c$ = A(1 - z) puis finalement la valeur recherchée $Cg_c$ = $A_c$.D/$T^3$ + B/$T^2$, laquelle sera dans ce cas à la fois valable à bas et à haut régimes du moteur et corrigé des perturbations à basses fréquences.

L'invention n'est pas limitée à la forme de réalisation décrite en référence à la figure 1 et aux lignes I et II de la figure 3. En effet, il est possible de remplacer les huit durées pondérées des paquets-repères de la ligne II de la figure 3 par les huit autres durées pondérées de la ligne III de cette même figure. Dans ce cas, les durées non prises en compte dans le calcul de $Q'_c$ à savoir $du_1$ et $du_4$, concernent six dents et les autres durées, sept dents. De ce fait, les durées $du_0$ et $du_5$ concernent chacune deux dents à l'intérieur de l'intervalle angulaire séparant deux points morts hauts consécutifs et cinq dents à l'extérieur de cet intervalle. La relation reliant $Q'_c$ aux durées $du_{-1}$, $du_0$, ..., $du_5$, $du_{+1}$, représentées à la ligne III de la figure 3, est la même que celle reliant $Q_c$ à ces mêmes durées représentées à la ligne II de cette figure. Ces deux relations sont illustrées avec signes et pondérations à ces lignes II et III. De même, à la ligne IV de la figure 3, est représentée une suite continue de quatre durées de paquets-repères $du_0$. ..., $du_3$ concernant chacune huit dents , les durées $du_0$ et $du_5$ incluant chacune une dent à l'extérieur de l'intervalle angulaire séparant deux points morts hauts consécutifs.

Dans le cas de la ligne III de la figure 3, les nombres de dents des paquets pris en compte et ceux des paquets non pris en compte, ainsi que les pondérations et les signes des durées des paquets pris en compte sont déterminés pour que le terme de calcul simplifié Q' = ($du_0$ - $du_2$ - $du_3$ + $du_5$) présente une valeur moyenne nulle au cours d'un horizon de mesure et une réponse fréquentielle non-nulle à la fréquence de cet horizon. Un coefficient de pondération constant p' est ensuite appliqué au terme Q' de manière que la réponse fréquentielle du terme D = p'.Q' à la fréquence de l'horizon de mesure soit identique à celle fournie pour ce terme D obtenu par le mode de calcul initial. Les trois paramètres visés plus haut (nombres de dents, pondérations et signes des paquets) sont en outre déterminés pour que la réponse fréquentielle du terme D = p'.Q' aux fréquences supérieures à la fréquence de l'horizon de mesure soit aussi faible que possible.

Par ailleurs, pour le calcul du terme q' de correction des perturbations à basse fréquence, l'expression définissant q' est identique à celle de q visée plus haut et les nombres des dents des paquets dont les durées sont référencées par $du_{-1}$ et $du_{+1}$, sont les mêmes que ceux des durées référencées $du_0$ et $du_5$, comme cela apparaît sur la ligne III de la figure 3.

L'ensemble des considérations ci-dessus qui concernent Q' et p' s'applique à l'exemple de réalisation présenté à la ligne IV de la figure 3, la valeur de Q' étant alors

$$Q' = (du_0 - du_1 - du_2 + du_3).$$

Dans les deux cas illustrés aux lignes III et IV de la figure 3, la préparation des grandeurs nécessaires au calcul de la période angulaire T des combustions du moteur sera modifiée pour tenir compte du fait que l'horizon de mesure déborde de part et d'autre l'intervalle angulaire concerné. Cette préparation consistera à calculer en plus des durées nécessaires au calcul de Q' et $Q'_c$ des durées $du_{0t}$ et $du_{5t}$ (pour l'exemple de la ligne III) ou $du_{3t}$ (pour celui de

la ligne IV) qui sont des durées $du_0$, $du_5$ ou $du_3$ tronquées limitées aux seules dents comprises dans cet intervalle angulaire. Pour ce faire, l'étage 36 de mesure des durées des paquets et d'identification de leurs rangs décrit ci-dessus calculera en plus ces durées tronquées et leur affectera une identification adéquate. L'étage 42 de calcul de la période T sera programmé en conséquence.

A titre de variante, on notera que les deux paquets de durées $du_2$ et $du_3$ dans les cas des lignes I, II et III de la figure 3 et ceux de durées $du_1$ et $du_2$ dans le cas de la ligne IV peuvent être rassemblés en un seul paquet par l'étage 36. Les calculs de T et de $Q_c$ qui suivent seront modifiés en conséquence.

On notera que l'intervalle angulaire définissant la largeur des paquets de rang 0 et n' détermine la précision de la mesure de $\delta Cg$. Lorsque cet intervalle est relativement petit, cette précision diminue. Lorsqu'il devient relativement grand, la mesure devient sensible aux pressions dans les cylindres. Cela, parce que les bras de levier des bielles ne sont plus négligeables et que, dans ce cas, le paquet de rang n' de l'horizon de mesure précédemment analysé (sa durée est référencée $du_{-1}$) et celui de rang 0 de l'horizon suivant (sa durée est référencée $du_{+1}$) sont notablement éloignés des deux points morts hauts consécutifs qui déterminent les frontières théoriques de l'horizon de mesure en cours d'analyse. Pour corriger cet effet négatif de l'élargissement des paquets de rang 0 et n', on peut introduire un léger décalage angulaire de l'horizon de mesure en cours d'analyse, en avançant quelque peu par les frontières de cet horizon de mesure par rapport aux deux points morts hauts qui les définissent théoriquement. Cela afin de s'éloigner des effets de la combustion.

On rappellera que le calcul du facteur négatif de qualité $\delta Cg$ du couple Cg peut être effectué quelle que soit la manière, simplifiée ou non, dont est calculé le terme Cg et en outre être, en tant que tel, mis à la disposition de l'utilisateur. Pour ce faire, un étage de calcul supplémentaire 55 sera prévu qui reçoit a de la mémoire 52, q de la mémoire 48, A de la mémoire 56 et T de la mémoire 44 et qui calcule

$$\delta Cg = a.q.A/T^3.$$

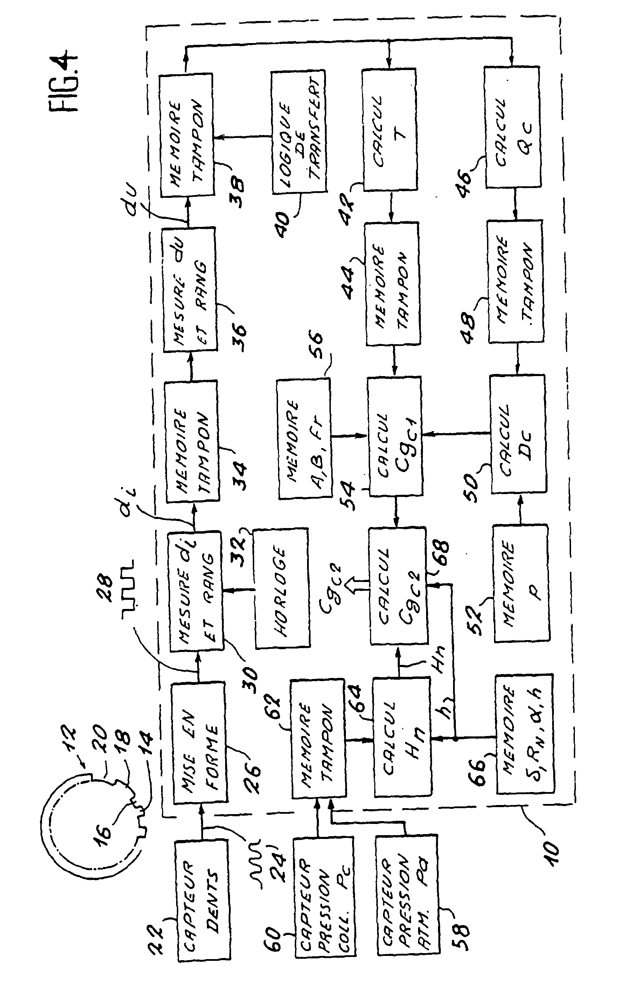

Selon la figure 4, est représenté un circuit 10 de mesure de couple gaz moyen corrigé dans un premier temps des perturbations à basse et haute fréquence produit par chaque combustion du mélange gazeux dans un moteur thermique à quatre temps et quatre cylindres fonctionnant à bas et haut régime ($Cg_{c1}$) et, dans un deuxième temps, des perturbations affectant la mesure du fait des conditions particulières des combustions dans le moteur ($Cg_{c2}$).

A cet effet, une couronne de mesure dentée 12 est montée solidaire du volant d'inertie d'un moteur à allumage électronique. A titre d'exemple, la couronne 12 comporte sur sa périphérie cinquante-six dents identiques régulièrement espacées, telles celle formée par le plein 14 et le creux 16, réparties en deux séries de vingt-huit dents séparées par deux dents de référence diamétralement opposées, telles celle formée par le plein 18 et le creux 20, qui ont une largeur double de celle des autres dents. En fait, la couronne 12 comporte (2x28 + 2x2) = 60 repères équidistants constitués par des dents réelles ou virtuelles de même module. Les deux dents larges diamétralement opposées servent de référence ou d'origine d'indexation afin de permettre de numéroter chacune des dents et notamment d'identifier la dent $d_o$ qui sera définie ci-après.

Avec le moteur thermique à quatre temps et quatre cylindres visé ci-dessus, on notera dès à présent que la période angulaire des combustions concerne trente dents et est égale à la moitié de la période de rotation du vilebrequin.

A la couronne 12 est associé un capteur fixe 22, par exemple à réluctance variable, adapté à délivrer un signal alternatif 24 de fréquence proportionnelle à la vitesse de défilement des dents de la couronne, c'est-à-dire proportionnelle à la vitesse instantanée du volant.

La position angulaire de ce capteur 22 par rapport aux dents d'indexation 18 au moment où le piston d'un cylindre est au point mort haut, est connue ou relevée. Cela permet d'identifier la dent $d_o$ comme étant celle qui défile devant le capteur pendant le passage du piston du cylindre concerné à son point mort haut de combustion. Le signal délivré par le capteur 22 est appliqué à l'entrée d'un circuit de mise en forme 26 adapté à délivrer des signaux 28 à flancs raides, de durée égale à la période instantanée $d_i$ des signaux incidents 24, l'indice i variant de 0 à 29 au fur et à mesure que les dents défilent devant le capteur. Chaque période $d_i$ du signal ainsi produit correspond à la durée de passage d'une dent, soit un plein et un creux, devant le capteur 22. Pour ce qui concerne les signaux incidents produits par les dents de référence 18, le circuit de mise en forme 26 les transforme de la même façon en un signal à flancs raides, de durée exactement double de celle des signaux afférents aux autres dents.

Les signaux 28 sont appliqués à un étage 30 de mesure et de calcul des périodes instantanées $d_i$ de défilement des dents réelles et virtuelles de la couronne de mesure 12 devant le capteur 22.

L'étage de mesure et de calcul 30 comprend des circuits de comptage qui reçoivent des impulsions chronométriques de fréquence élevée (10 MHz par exemple) produites par une horloge à quartz 32 et il délivre en sortie des valeurs numériques représentatives des nombres d'impulsions d'horloge comptées entre deux transitions creux-plein des signaux à flancs raides produits par l'étage de mise en forme 26. Pour ce qui est du traitement de chaque signal 28 produit par l'une des dents longues d'indexation 18-20 dans le cadre de l'exemple décrit, sa valeur sera divisée par deux (décalage d'un bit) et le résultat affecté aux deux dents virtuelles correspondantes. De la sorte, l'étage 30 de mesure et de calcul des périodes $d_i$ adresse à une mémoire-tampon 34 des séries successives de trente valeurs numériques $d_i$, respectivement associées à trente nombres consécutifs allant de 0 à 29 définissant le rang i de chacune des dents réelles ou virtuelles comprises dans un horizon de mesure.

La mémoire-tampon 34 est connectée à un étage de calcul 36 adapté à regrouper par paquets de cinq les trente durées instantanées $d_i$ comprises entre deux dents de référence. De la sorte, l'étage 36 produit successivement six durées de défilement de paquets de cinq dents-repères, respectivement numérotées $du_0$, ..., $du_5$ au fur et à mesure de leur production, la valeur angulaire de chaque paquet étant $\pi/6$, ces durées et ces numéros sont ensuite transmis à une mémoire tampon 38 placée sous le contrôle d'un étage de commande de transfert 40 adapté par ailleurs à recevoir les durées $du_0$.

La mémoire-tampon 38 est adaptée à contenir trois suites successives de six durées de paquets-repères : une suite centrale qui définit l'horizon de mesure en cours d'analyse, une suite avant qui précède cette suite centrale dans le temps et une suite arrière qui la suit. A l'arrivée d'une nouvelle durée $du_0$, l'étage de commande de transfert 40 est adapté à transférer aux étages suivants les six durées référencées $du_0$, ..., $du_5$ de la suite centrale ainsi que, sous la référence $du_{-1}$, la durée $du_5$ du dernier paquet de la suite avant et sous la référence $du_{+1}$, la durée $du_0$ du premier paquet de la suite qui vient d'arriver.

Un premier étage de calcul 42 qui reçoit ces huit durées successives est programmé pour sélectioner les six durées référencées $du_0$, ... $du_5$ et pour en calculer la somme, laquelle est la période instantanée T d'un intervalle angulaire des combustions. Chaque nouvelle valeur T ainsi calculés est adressée à une mémoire-tampon 44 où elle remplace la valeur précédemment calculée.

Un deuxième étage de calcul 46 qui reçoit ces huit durées successives ($du_{-1}$, $du_0$, ..., $du_5$, $du_{+1}$) est programmé pour sélectionner les six durées suivantes : $du_{-1}$, $du_0$, $du_2$, $du_3$, $du_5$ et $du_{+1}$ et pour les combiner selon la relation :

$$Q_c : 2du_0 - du_{-1} - du_2 + 2du_5 - du_3 - du_{+1}.$$

Le terme $Q_c$ ainsi calculé est adressé à une mémoire-tampon 48 dans laquelle il demeure jusqu'à l'arrivée d'une nouvelle valeur de $Q_c$. La mémoire-tampon 48 est reliée à un troisième étage de calcul 50 qui reçoit par ailleurs une mémoire 52, la constante de pondération $p = \pi/2\sqrt{3}$. L'étage de calcul 50 est adapté à calculer le produit $Q_c = p.Q_c$ et à l'appliquer à un quatrième étage de calcul 54.

Cet étage de calcul 54 reçoit en outre d'une mémoire 56, deux constantes A et B déterminées expérimentalement et, de la mémoire-tampon 44, le terme T. A partir de ces quatre grandeurs, l'étage 54 calcule le couple gaz, corrigé des perturbations à basse fréquence, selon la relation $Cg_c = A.Q_c/T^3 + B/T^2$. Le couple $Cg_c$ ainsi obtenu est corrigé des perturbations à basse fréquence.

Comme cela a été dit dans le préambule de la présente description, la formule utilisée pour le calcul du couple gaz moyen, à savoir $Cg = A.Q/T^3 + B/T^2$ n'est valable que pour des moteurs fonctionnant à bas régime. Dans le cas d'un moteur fonctionnant à haut régime, une correction doit être apportée au coefficient A en question, comme cela est indiqué dans le brevet N° 91 11273 visé dans le préambule. Pour ce faire, le coefficient A est remplacé par $A_c = A(1 - z)$ avec $z = (fi/fr)^2$. Dans cette relation $fi = 1/T$, la fréquence instantanée des combustions et fr est la fréquence de résonance en torsion de la liaison vilebrequin/volant d'inertie. Pour mettre en oeuvre cette correction dans le cadre de la présente invention, la mémoire 56 contiendra le terme constant fr et l'étage de calcul 54 calculera $fi = 1/T$ puis $z = (fi/fr)^2$ puis $A_c = A(1 - z)$ puis finalement la valeur recherchée $Cg_c = A_c.Q/T^3 + B/T^2$, laquelle sera dans ce cas à la fois valable à bas et à haut régimes du moteur et corrigé des perturbations à basses fréquences.

Selon la présente invention, la forme de réalisation représentée à la figure 4 comporte, en outre, un capteur 58 de pression atmosphérique Pa, un capteur 60 de pression Pc dans le collecteur d'admission d'air, et une mémoire-tampon 62 à laquelle sont appliquées les données produites par les capteurs de pression 58-60. Ces deux capteurs de pression seront par exemple du type à jauges de contrainte diffusées dans une pastille de silicium. Ils produisent tout d'abord une grandeur analogique représentative de la pression mesurée. Cette grandeur est ensuite convertie en une valeur numérique par un convertisseur analogique/numérique incorporé avant d'être appliquée à la mémoire-tampon 62. Cette mémoire-tampon 62 est adaptée à détenir à tout instant trois mesures successives de la pression Pc, faites au cours de trois intervalles de combustion successifs. Ces mesures sont la dernière reçue $Pc_{(n')}$ et les deux précédentes $Pc_{(n'-1)}$ et $Pc_{(n'-2)}$, chaque mesure étant identifiée par son rang n', (n'-1) ou (n'-2). La mémoire-tampon 62 est placée sous le contrôle d'un étage de calcul 64 auquel elle communique les quatre données de pression qu'elle détient. L'étage de calcul 64 est adapté à calculer le terme

$$H_{n'} = -\delta.R_N.(Pc_{(n'-2)} + Pc_{(n'-1)}) + \alpha.(Pc_{(n'-2)} - Pa)$$

à partir de trois des quatre données de pression ci-dessus et de trois constantes $\delta$, $R_N$ et $\alpha$ stockées dans une mémoire permanente 66. Les valeurs de ces constantes ont été indiquées plus haut.

Un dernier étage de calcul 68 reçoit, d'une part, la valeur $Cg_{c1}$ produite par l'étage de calcul 54 et, d'autre part, la valeur du terme $H_{n'}$ calculée par l'étage de calcul 64 ainsi qu'une constante h également stockée dans la mémoire 66. L'étage de calcul 68 est adapté à calculer la valeur recherchée $Cg_{cn'2}$ selon la relation

$$Cg_{cn'2} = h.Cg_{cn'1} + H_{n'}.$$

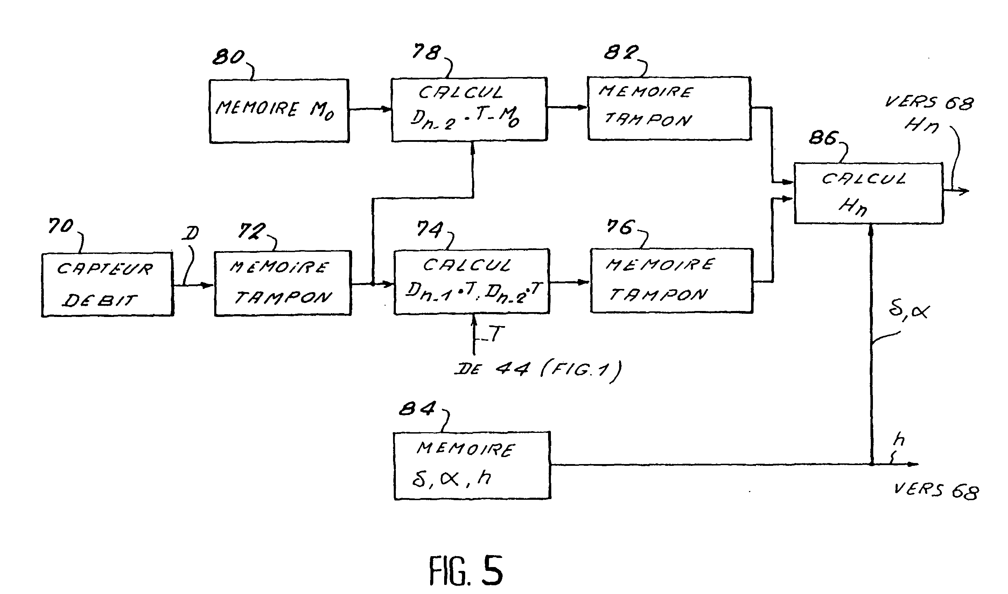

Comme cela a été indiqué plus haut, la grandeur $Cg_{cn'2}$ ainsi obtenue est la valeur numérique totalement corrigée du couple d'un moteur thermique à combustion interne, du type à quatre temps, quatre cylindres et à injection, qui fonctionne à bas et haut régimes, cette valeur étant, en effet, en outre corrigée des perturbations à basse fréquence affectant le moteur ainsi que des erreurs occasionnées par les conditions particulières des combustions dans le moteur (taux de recirculation des gaz d'échappement, taux de gaz résiduels, excès de comburant et régimes transitoires). Comme cela a été indiqué plus haut, l'invention peut être mise en oeuvre à partir d'une mesure de débit d'air dans le collecteur, en lieu et place d'une mesure de pression. Les moyens particuliers de mise en oeuvre de cette variante sont représentés à la figure 5.

Selon la figure 5, un capteur de débit massique 70 est placé dans le collecteur d'admission d'air. Ce capteur 70 sera par exemple du type à fil chaud ou à lame élastique encastrée à une extrémité. Les éléments sensibles de ces capteurs sont montés en pont, de manière à produire tout d'abord un signal analogique qu'un convertisseur analogique/numérique incorporé transforme ensuite en grandeur numérique. Cette grandeur numérique est appliquée à une mémoire-tampon 72, laquelle est adaptée à détenir à tout moment trois données $D_{n'}$, $D_{n'-1}$ et $D_{n'-2}$ représentatives respectivement des débits d'air dans le collecteur d'admission, au cours de l'intervalle de combustion de rang n' en cours d'analyse et des deux intervalles de combustion le précédant dans le temps. Les données stockées dans la mémoire-tampon 72 sont appliquées à un étage de calcul 74 recevant par ailleurs de la mémoire-tampon 44, la période T de l'intervalle de combustion en cours d'analyse (cette période est pratiquement constante au cours des trois périodes successives concernées). L'étage de calcul 74 est adapté à calculer successivement les termes $(D_{n'-1}.T)$ et $(D_{n'-2}.T)$ et à les appliquer à une mémoire-tampon 76. Ces deux derniers termes sont respectivement $M_{n'-1}$ et $M_{n'-2}$ comme cela a été indiqué plus haut (en rappelant que T = 1/2N). Par ailleurs, la donnée $D_{n'-2}$ stockée dans la mémoire-tampon 72 est appliquée à un étage de calcul 78 adapté à calculer $(D_{n'-2}.T - M_0)$ à partir de $D_{n'-2}$ et de $M_0$, la masse d'air introduite dans un cylindre pour un papillon à pleine ouverture, qui est une constante mesurée, stockée dans une mémoire permanente 80. Le terme $(D_{n'-2}.T - M_0)$ ainsi calculé est $CP_{(n'-2)}$. Ce terme est ensuite appliqué à une mémoire-tampon 82.

Dans une mémoire permanente 84 sont stockées les termes constants $\delta$, $\alpha$ et h définis plus haut. Les termes $(D_{n'-1}.T)$ et $D_{n'-2}.T)$ stockés dans la mémoire-tampon 76, le terme $(D_{n'-2}.T - M_0)$ stocké dans la mémoire-tampon 82 et les constantes $\delta$ et $\alpha$ stockées dans la mémoire permanente 84 sont appliqués à l'étage de calcul 86 adapté à élaborer le terme $H_n$ visé ci-dessus. Dans cet étage 86, la relation exprimant $H_n$ est :

$$H_{n'} = -\delta.(D_{n'-1}.T + D_{n'-2}.T) + \alpha.(D_{n'-2}.T - M_0).$$

Cette relation est équivalente à celle utilisée plus haut à partir de données représentatives des pressions dans le collecteur d'air et de la pression atmosphérique.

Au cours de la période d'analyse de rang (n'-2), on produit des données $Pc_{(n'-2)}$ ou $D_{(n'-2)}$ permettant, d'une part, de calculer le couple de pompage $Cp_{(n'-2)}$ du cylindre qui sera en détente pendant la période d'analyse de rang n' et d'autre part, la masse d'air $M_{(n'-2)}$ qui participera à la combustion effectuée pendant cette période de rang n'. Au cours de la période d'analyse de rang (n-1), on produit des données $Pc_{(n'-1)}$ ou $D_{(n'-1)}$ permettant de calculer le couple de compression du cylindre en compression pendant la période d'analyse de rang n', qui sera en détente pendant la période d'analyse de rang (n'+1), ce couple de compression étant proportionnel à $M_{(n'-1)}$.

Ces couples de pompage puis de compression et cette masse d'air participant à la combustion au cours de la période d'analyse de rang n' sont directement dépendantes des conditions particulières des combustions. Leur prise en compte permet de corriger les effets sur Cg du taux de recirculation des gaz d'échappement, du taux de gaz brûlés résiduels, de l'excès de carburant et des régimes transitoires du moteur.

On pourra calculer Cg à partir de la relation générale définissant D, au lieu de la relation simplifiée mise en oeuvre dans l'exemple décrit. De même, on pourra dans certains cas, ne pas faire intervenir les corrections à l'égard des perturbations à basse fréquence et/ou celles concernant les hauts régimes du moteur. Par ailleurs, pour tenir compte des variations limitées du coefficient de remplissage des cylindres en fonction de la vitesse de rotation du moteur, un circuit de correction recevant la valeur moyenne R de ce coefficient et la période des combustions T pourra être prévu qui produira $R_N$ à partir d'une cartographie déterminée par l'expérience. Un tel circuit sera placé entre la mémoire 66 et l'étage de calcul 64.

**Revendications**

1. Procédé pour produire une valeur numérique Cg représentative du couple gaz moyen engendré par chaque combustion du mélange gazeux dans les cylindres d'un moteur thermique comprenant :

   - des repères de mesure (14, 16) disposés sur une couronne (12) solidaire du volant d'inertie du moteur ou de son vilebrequin ;
   - des moyens (18, 20) pour définir au moins une référence d'indexation des repères ;
   - un capteur (22) de défilement des repères (14, 16), monté fixe au voisinage de la couronne (12) ;
   - ledit procédé consistant à :

     - produire (26, 30) une valeur numérique primaire $d_i$ représentative de la durée instantanée de défilement devant le capteur (22) de chacun des repères (14, 16) ;
     - élaborer (42), à partir des valeurs numériques primaires $d_i$, une première valeur numérique secondaire T représentative de la durée totale de défilement devant le capteur (22) de chaque série de n repères définissant l'intervalle angulaire des combustions dans le moteur ;
     - élaborer (46) une seconde valeur numérique secondaire D, représentative de la projection sur la ligne de référence de phase des repères (18, 20) correspondant à l'origine des périodes angulaires des combustions, de l'amplitude de la composante alternative des durées instantanées $d_i$ de défilement des repères (14, 16) devant le capteur (22) à la fréquence des combustions dans le moteur ;
     - élaborer (54) la valeur numérique recherchée Cg à partir de la relation Cg = $A.D/T^3 + B/T^2$ dans laquelle A et B (56) sont des constantes déterminées expérimentalement,

   - ledit procédé étant **caractérisé en ce qu'**il consiste également à :

     - établir (36) un horizon de mesure au moins égal à l'intervalle angulaire entre deux explosions consécutives dans le moteur ;
     - regrouper (36) les durées instantanées $d_i$ de défilement des repères compris dans cet horizon de mesure en un nombre relativement petit de durées $du_0$, ..., $du_n$ de défilement de paquets de repères et identifier ces durées du par leur rang 0 ... n dans chaque horizon de mesure en cours d'analyse ;
     - combiner ensemble, par addition et soustraction (46) éventuellement pondérées, un nombre donné de durées ayant des rangs déterminés, de manière à produire une grandeur Q ayant une valeur moyenne nulle et une réponse fréquentielle non-nulle à la fréquence d'analyse des explosions du moteur ;
     - déterminer une constante de pondération p telle que le terme D = p.Q obtenu par un calcul simplifié ait une réponse fréquentielle, au moins pour ladite fréquence d'analyse et pour la combinaison des durées retenue pour exprimer Q, sensiblement identique à celle obtenue pour le terme :

$$D = \sum_{0}^{(n-1)} d_i . \cos(i.2\pi/n)$$

2. Procédé selon la revendication 1, **caractérisé en ce que** :

   - le nombre de paquets compris dans un horizon de mesure est un nombre pair,
   - les longueurs angulaires de ces paquets sont égales,
   - le nombre des durées de paquets combinées pour produire Q est un nombre pair au moins égal à quatre.

3. Procédé selon la revendication 1 ou 2, **caractérisé en ce que** la réponse fréquentielle du terme D = p.Q est jusqu'à quatre fois ladite fréquence d'analyse, sensiblement identique à celle initialement obtenue.

**4.** Procédé selon l'une des revendications précédentes **caractérisé en ce que** l'horizon de mesure comprend, outre l'intervalle angulaire séparant deux explosions consécutives dans le moteur, un petit nombre de repères situés de part et d'autre de cet intervalle.

**5.** Procédé selon l'une des revendications 1, 3, 4, **caractérisé en ce que** les paquets de repères d'un horizon de mesure ne sont pas de longueurs exactement identiques.

**6.** Procédé selon les revendications 1 et 2, **caractérisé en ce que** :

- l'horizon de mesure est exactement défini par l'intervalle angulaire séparant deux explosions dans le moteur ;
- le nombre de paquets de repères est six et les six durées mesurées référencées $du_0$, ..., $du_5$ ;
- la grandeur $Q = (du_0 - du_2 - du_3 + du_5)$ et la constante de pondération $p = \pi/2\sqrt{3}$, lorsque les six paquets ont la même longueurangulaire $\pi/6$.

**7.** Procédé selon la revendication 1, **caractérisé en ce que** :

- l'intervalle entre deux explosions consécutives est découpé en six paquets de longueur angulaire identique ;
- l'horizon de mesure est égal à sept paquets consécutifs référencés $du_0$..., $du_6$ ;
- la grandeur $Q$ vaut $Q = du_0 - du_3 + 3/2.(du_6 - du_4)$.

**8.** Procédé pour produire une première valeur numérique Cg représentative du couple gaz moyen engendré par chaque combustion du mélange gazeux dans les cylindres d'un moteur thermique selon l'une quelconque des revendications 1 à 7 et une seconde valeur numérique $\delta$Cg représentative des variations du couple résistant appliqué à un moteur à deux ou quatre cylindres, le procédé pour produire ladite seconde valeur $\delta$Cg étant **caractérisé en ce qu'**il consiste à :

- établir (36) un horizon de mesure au moins égal à l'intervalle angulaire entre deux explosions consécutives dans le moteur ;
- regrouper (36) les durées instantanées $d_i$ de défilement des repères compris dans cet horizon de mesure en un nombre relativement petit de durées $du_0$, ..., $du_{n'}$ de défilement de paquets de repères et identifier ces durées du par leur rang 0 ... n' dans chaque horizon de mesure en cours d'analyse, les valeurs angulaires des paquets des durées de rang 0 et n' étant égales ;
- affecter (38-40) la référence $du_{-1}$ à la durée du dernier paquet de repères du dernier horizon de mesure précédemment analysé et la référence $du_{+1}$ à la durée du premier paquet de repères du prochain horizon de mesure analysé ;
- combiner (47) quatre de ces durées du suivant une relation $q = (du_0 - du_{-1} + du_{n'} - du_{+1})$ ;
- élaborer (55) le terme $\delta$Cg recherché suivant la relation $\delta Cg = a.q.A/T^3$, dans laquelle a est une nouvelle constante dépendant de la valeur angulaire des quatre paquets de repères concernés.

**9.** Procédé selon la revendication 8, **caractérisé en ce que** :

- l'horizon de mesure est exactement défini par l'intervalle angulaire séparant deux explosions dans le moteur ;
- le nombre de paquets de repères dans l'horizon de mesure est six et la valeur angulaire de chaque paquet est $\pi/6$ ;
- la constante $a = \pi/2\sqrt{3}$.

**10.** Procédé selon la revendication 8, **caractérisé en ce que** l'intervalle angulaire des paquets de repères de durées référencées $du_0$ et $du_n$, étant relativement important pour produire un terme $\delta$Cg plus précis, les horizons de mesure présentent une légère avance de phase vis-à-vis des intervalles des points morts hauts du moteur.

**11.** Procédé selon les revendications 6 et 8, **caractérisé en ce que** pour produire un terme Q, corrigé des perturbations à basse fréquence engendrées par les variations du couple résistant appliqué au moteur, ce terme est calculé (50) selon la relation :

$$Q_c = (Q + q) = (2du_0 - du_{-1} - du_2 - du_3 - du_{+1} + 2du_5).$$

**12.** Procédé pour produire une valeur numérique $Cg_c$ représentative du couple gaz moyen, engendré par chaque combustion du mélange gazeux dans les quatre cylindres d'un moteur thermique selon l'une quelconque des revendications 1 à 11 et corrigé des influences des conditions particulières de ces combustions , ledit procédé étant **caractérisé en ce qu'**il consiste également à :

- mesurer (58 - 60 - 70), notamment dans le collecteur d'admission d'air du moteur, les paramètres physiques permettant de déterminer la masse d'air M (64 - 74) pompée dans un cylindre au cours de la période de combustion d'un autre cylindre, ainsi que le couple de pompage Cp (64 - 78) nécessaire à cet effet,
- mémoriser (62 - 72) les valeurs de ces paramètres physiques ou celles des grandeurs M et Cp, pendant les deux périodes de combustion suivantes,
- combiner (68 - 86) les données ainsi mémorisées pour produire un terme $H_{n'}$ de correction du couple $Cg_{n'}$ afférent à la période de combustion de rang n selon la relation $H_{n'} = -\delta(M_{n'-2} + M_{n'-1}) + \alpha.Cp_{(n'-2)}$, dans laquelle $\delta$ et $\alpha$ sont des constantes dépendant du type de moteur ;
- calculer (68) le couple gaz moyen corrigé, engendré au cours de la période de combustion de rang n, selon la relation $Cg_{cn'} = h.Cg_{n'} + H_{n'}$ dans laquelle h est une constante d'étalonnage dépendant du type de moteur.

**13.** Procédé selon la revendication 12, **caractérisé en ce que** :

- déterminer la masse d'air M consiste à mesurer (60) la pression Pc dans le collecteur d'admission d'air du moteur et à calculer (64) M selon la relation $M = Pc.RN$ dans laquelle $R_N$ est le coefficient, sensiblement constant en fonction de la vitesse N du moteur, de remplissage des cylindres du moteur ,
- déterminer le couple de pompage Cp consiste à mesurer (58) la pression atmosphérique Pa et à calculer (64) Cp selon la relation $Cp = (Pc - Pa)$.

**14.** Procédé selon la revendication 12, **caractérisé en ce que** :

- déterminer la masse d'air M consiste à mesurer (70) le débit massique Da de l'air dans le collecteur et à calculer (74) M selon la relation $M = Da.T$, dans laquelle T est 1a période des combustions,
- déterminer le couple de pompage Cp consiste à calculer (78) Cp selon la relation $Cp = (Da.T - M_0)$ dans laquelle $M_0$ est la masse d'air introduite dans un cylindre pour un papillon à pleine ouverture.

**15.** Procédé selon l'une des revendications 12, 13, 14, **caractérisé en ce que** le terme D de la relation définissant Cg est obtenu par la mise en oeuvre des étapes ci-après :

- établir un horizon de mesure au moins égal à l'intervalle angulaire entre deux explosions consécutives dans le moteur et diviser cet horizon de mesure en un nombre relativement petit de paquets de repères ;
- calculer (36) les durées de défilement de chacun de ces paquets devant le capteur (22) et leur affecter un rang dans chaque horizon de mesure.
- combiner ensemble, par addition et soustraction (46), un nombre donné de durées ayant des rangs déterminés, de manière à produire une grandeur Q ayant une valeur moyenne nulle et une réponse fréquentielle non-nulle à la fréquence d'analyse des explosions du moteur ;
- déterminer une constante de pondération p telle que le terme $D = p.Q$ obtenu par un calcul simplifié ait une réponse fréquentielle au moins pour ladite fréquence d'analyse et pour la combinaison des durées retenue pour exprimer Q, sensiblement identique à celle obtenue pour un terme

$$\sum_{0}^{n-1} d_i.\cos(i.2\pi/n).$$

**16.** Procédé selon la revendication 15, **caractérisé en ce que** la valeur angulaire de chaque paquet de repères est $\pi/6$.

**17.** Procédé selon la revendication 15, **caractérisé en ce que** pour produire un terme $D_c = p.Q_c$ corrigé des perturbations à basse fréquence affectant le moteur, chaque paquet de repères mesure $\pi/6$, la constante $p = \pi/2\sqrt{3}$ et la valeur du terme Q ainsi corrigé est $Q_c = (2du_0 - du_{-1} - du_2 - du_3 - du_{+1} + 2du_5)$, avec $du_{-1}$ et $du_{+1}$, les durées respectives de défilement des paquets disposés à un instant donné de part et d'autre dudit intervalle angulaire.

**18.** Dispositif pour produire une valeur numérique Cg représentative du couple gaz moyen engendré par chaque combustion du mélange gazeux dans les cylindres d'un moteur thermique fonctionnant à bas régime,

- ledit moteur comprenant :

  - des repères de mesure (14, 16) disposés sur une couronne (12) solidaire du volant d'inertie ou du vilebrequin,
  - des moyens (18, 20) pour définir au moins une référence d'indexation des repères ;
  - un capteur (22) de défilement des repères (14, 16) monté fixe au voisinage de la couronne (12) ;

- ledit dispositif comprenant :

  - des moyens de calcul (30) pour produire une valeur numérique primaire $d_i$ représentative de la durée instantanée de défilement devant le capteur (22) de chacun des repères (14, 16) ;
  - des moyens de calcul (42) pour élaborer à partir des valeurs numériques primaires $d_i$ une première valeur numérique secondaire T représentative de la durée totale de défilement devant le capteur (22) de chaque série de n repères définissant l'intervalle angulaire séparant deux combustions consécutives dans le moteur ;
  - des moyens de calcul (46) pour élaborer une seconde valeur numérique D représentative de la projection, sur la ligne de référence de phase des repères (18, 20) correspondant à l'origine des périodes angulaires des combustions, de l'amplitude de la composante alternative des durées instantanées $d_i$ de défilement des repères (14, 16) devant le capteur (22) à la fréquence des combustions dans le moteur ;
  - des moyens de calcul (54) pour élaborer la valeur numérique recherchée Cg à partir de la relation Cg = $A.D/T^3 + B/T^2$ dans laquelle A et B sont des constantes expérimentalement déterminées, contenues dans une mémoire (56) ;

- ledit dispositif étant **caractérisé en ce qu'**il comprend également :

  - des moyens de traitement et de calcul (36) pour établir un horizon de mesure au moins égal audit intervalle angulaire, pour regrouper les durées instantanées $d_i$ de défilement des repères compris dans cet horizon de mesure en un nombre relativement petit de durées $du_0$, ... , $du_n$ de défilement de paquets de repères et pour identifier ces durées du par leur rang (0 ... n) dans chaque horizon de mesure ;
  - des moyens de calcul (46) pour combiner ensemble, par addition et soustraction, un nombre donné de durées de paquets ayant des rangs déterminés, de manière à produire une grandeur Q ayant une valeur moyenne nulle et une réponse fréquentielle non-nulle à la fréquence d'analyse des explosions du moteur ;
  - des moyens de calcul (50) pour produire un terme D = p.Q à partir de la valeur Q précédemment calculée et d'un coefficient de pondération p déterminé expérimentalement et stocké dans une mémoire (52), la valeur de p et la combinaison des durées retenue pour exprimer Q ayant été déterminées de manière que le terme D ainsi obtenu par un calcul simplifié ait une réponse fréquentielle, au moins pour ladite fréquence d'analyse, identique à celle obtenue pour le terme :

$$\sum_{0}^{n-1} d_i.\cos(i.2\pi/n).$$

19. Dispositif selon la revendication 18 pour produire une première valeur numérique Cg représentative du couple gaz moyen engendré par chaque combustion du mélange gazeux dans les cylindres d'un moteur thermique fonctionnant à bas régime et une seconde valeur numérique $\delta$Cg représentative des variations du couple résistant appliqué à un tel moteur comportant deux ou quatre cylindres, ledit dispositif pour produire ladite seconde valeur $\delta$Cg étant **caractérisé en ce qu'**il comprend également :

- des moyens de traitement et de calcul (36) pour constituer un horizon de mesure au moins égal à l'intervalle angulaire entre deux explosions consécutives dans le moteur, pour regrouper les durées instantanées $d_i$ de défilement des repères compris dans cet horizon de mesure en un nombre relativement petit de durées $du_0$, ..., $du_{n'}$ de défilement de paquets de repères et pour identifier ces durées du par leur rang 0 ... n' dans chaque horizon de mesure en cours d'analyse, les valeurs angulaires des paquets de repères des durées de rang 0 et n' étant égales ;
- des moyens (38) pour mémoriser les durées $du_0$, ..., $du_{n'}$ ainsi que, d'une part, la durée du dernier paquet de repères du dernier horizon de mesure précédemment analysé et pour lui affecter la référence $du_{-1}$ et, d'autre part, la durée du premier paquet de repères du prochain horizon de mesure analysé et pour lui affecter la

référence $du_{+1}$ ;
- des moyens (47) pour produire un terme q selon la relation q = $(du_0 - du_{-1} + du_{n'} - du_{+1})$ ;
- des moyens (55) pour élaborer le terme $\delta$Cg recherché selon la relation $\delta$Cg = a.q.A/$T^3$, dans laquelle a est une constante dépendant de la valeur angulaire des quatre paquets de repères concernés.

20. Dispositif selon l'une quelconque des revendications 18 à 19 pour produire une valeur numérique Cg représentative du couple gaz moyen engendré par chaque combustion du mélange gazeux dans les quatre cylindres d'un moteur thermique à quatre temps fonctionnant à bas régime, ladite valeur étant corrigée des influences des conditions particulières de ces combustions, **caractérisé en ce qu'**il comprend également :

- des moyens (60 - = 62 - 64 ou 70 - 72- 74) incluant des capteurs (60 - 70) installés dans le collecteur d'admission d'air, pour déterminer la masse d'air M pompée dans un cylindre au cours de la période de combustion d'un autre cylindre,
- des moyens (58 - 60 - 62 - 64 ou 70 - 72 - 78) pour déterminer le couple de pompage Cp nécessaire à cet effet ;
- des moyens pour mémoriser (62 ou 72 - 76 - 82) les données M et Cp ou les éléments constitutifs de ces données pendant les deux périodes de combustion suivantes,
- des moyens (64 ou 86) pour combiner ces données ou leurs éléments constitutifs pour produire en terme $H_{n'}$ de correction du couple $Cg_{n'}$ afférent à la période de combustion de rang n selon la relation :
  $H_{n'} = - \delta.(M_{n'-2} + M_{n'-1}) + \alpha.Cp_{(n'-2)}$, dans laquelle $\delta$ et $\alpha$ sont des constantes dépendantes du type de moteur,
- des moyens de calcul (68) pour calculer le couple gaz moyen corrigé, engendré au cours de la période de combustion de rang n', selon la relation :
  $Cg_{cn'} = h.Cg_{n'} + H_{n'}$, dans laquelle h est une constante d'étalonnage dépendant du type de moteur.
- les constantes $\delta$, $\alpha$ et h étant stockées dans une mémoire permanente (66 ou 84).

**Claims**

1. Method for producing a digital value Cg representative of the average gas torque generated by each combustion of the gas mixture in the cylinders of a combustion engine, comprising:

   - measurement markers (14, 16) arranged on a crown (12) integral with the flywheel of the engine or the crankshaft thereof;

   - means (18, 20) for defining at least one reference for indexing the markers;

   - a sensor (22) of the passing of the markers (14, 16) mounted in a fixed manner in the vicinity of the crown (12);

   - said method consisting of:

     - producing (26, 30) a primary digital number $d_i$ representative of the momentary duration of the passing of each of the markers (14, 16) in front of the sensor (22);

     - forming (42) from the primary digital values $d_i$ a first secondary digital value T representative of the total duration of passing in front of the sensor (22) of each series of n markers defining the angular interval of combustions in the engine;

     - forming (46) a second secondary digital value D representative of the projection on the marker phase reference line (18, 20) corresponding to the origin of the angular periods of the combustions, from the amplitude of the alternative component of the momentary durations $d_i$ of passing of the markers (14, 16) in front of the sensor (22) to the frequency of combustions in the engine;

     - forming (54) the digital value $C_g$ sought from the relationship $C_g = A \cdot D/T^3 + B/T^2$ in which A and B (56) are constants determined experimentally,

   - said method being **characterised in that** it also consists of:

     - establishing (36) a measurement horizon at least equal to the angular interval between two consecutive explosions in the engine;

- collecting (36) the momentary durations $d_i$ of passing of the markers included in this measurement horizon into a relatively small number of durations $du_0$, ..., $du_n$ of passing of packets of markers and identifying these durations by their rank 0 ... n in each measurement horizon during analysis;

- combining together by addition and subtraction (46), possibly weighted, a given number of durations having established ranks, such as to produce a value Q having an average value of zero and a non-zero frequency response to the analysis frequency of the engine explosions;

- determining a weighting constant p such as the term D = p·Q obtained by a simplified calculation has a frequency response, at least for said frequency of analysis and for combination of the durations retained to express Q, substantially identical to that obtained for the term:

$$(n-1)$$

$$D = \Sigma \; d_i \cdot \cos(i \cdot 2\Pi/n)$$

$$0$$

2. Method according to claim 1, **characterised in that**:

- the number of packets comprised in a measurement horizon is an even number,

- the angular lengths of said packets are equal,

- the number of durations of packets combined to produce Q is an even number at least equal to four.

3. Method according to claim 1 or 2, **characterised in that** the frequency response of the term D = p·Q is up to four times said analysis frequency, substantially identical to that initially obtained.

4. Method according to one of the preceding claims, **characterised in that** the measurement horizon comprises, in addition to the angular interval separating two consecutive explosions in the engine, a small number of markers situated on either side of said interval.

5. Method according to one of claims 1, 3, 4, **characterised in that** the packets of markers of a measurement horizon are not of exactly identical lengths.

6. Method according to claims 1 and 2, **characterised in that**:

- the measurement horizon is exactly defined by'the angular interval separating two explosions in the engine;

- the number of packets of markets is six, and the six durations measured referenced $du_0$, ..., $du_5$;

- the value $Q = (du_0 - du_2 - du_3 + d_5)$ and the weighting constant $p = \Pi/2\sqrt{3}$, when the six packets have the same angular length $\Pi/6$.

7. Method according to claim 1, **characterised in that**:

- the interval between two consecutive explosions is split into six packets of identical angular length;

- the measurement horizon is equal to seven consecutive packets referenced $du_0$ ..., $du_6$;

- the value Q is equivalent to $Q = du_0 - du_3 + 3/2 \cdot (du_6 - du_4)$.

8. Method for producing a first digital value Cg representative of the average gas torque generated by each combustion of the gas mixture in the cylinders of a combustion engine according to any one of claims 1 to 7 and a second

digital value $\delta Cg$ representative of the variations in resistant torque applied to a two or four cylinder engine, the method for producing said second value $\delta Cg$ being **characterised in that** it consists of:

- establishing (36) a measurement horizon at least equal to the angular interval between two consecutive explosions in the engine;

- collecting (36) the momentary durations di of passing of the markers included in this measurement horizon into a relatively small number of durations $du_0$, ..., $du_n$, of passing of packets of markers, and identifying these durations by their rank 0 ... n, in each measurement horizon during analysis, the angular values of the packets of durations from rank 0 and n being equal;

- assigning (38 - 40) the reference $du_{-1}$ to the duration of the last packet of markers of the last measurement horizon previously analysed, and the reference $du_{+1}$ to the duration of the first packet of markers of the next measurement horizon analysed;

- combining (47) four of these durations du according to a relationship $q = (du_0 - du_{-1} + du_{n'} - du_{+1})$;

- forming (55) the term $\delta Cg$ sought according to the relationship $\delta Cg = a \cdot q \cdot A/T^3$, in which a is a new constant depending upon the angular value of the four packets of markers concerned.

9. Method according to claim 8, **characterised in that**:

- the measurement horizon is exactly defined by the angular interval separating two consecutive explosions in the engine;

- the number of packets of markers in the measurement horizon is six, and the angular value of each packet is II/6;

- the constant $a = II/2\sqrt{3}$.

10. Method according to claim 8, **characterised in that** as the angular interval of the packets of markers of durations referenced $du_0$ and $du_{n'}$ is relatively large in order to produce a more accurate term $\delta Cg$, the measurement horizons have a slight phase advance with respect to the top-dead-centre intervals of the engine.

11. Method according to claims 6 and 8, **characterised in that** in order to produce a term Q, corrected with respect to low frequency interference generated by variations in the resistant torque applied to the engine, this term is calculated (50) according to the relationship:

$$Qc = (Q + q) = (2duo - du_{-1} - du_2 - du_3 - du_{+1} + 2du_5).$$

12. Method for producing a digital value Cgc representative of the average gas torque generated by each combustion of the gas mixture in the four cylinders of a combustion engine according to any one of claims 1 to 11, and corrected with respect to the effects of the particular conditions of these combustions, said method being **characterised in that** it also consists of:

- measuring (58-60-70) particularly in the air intake manifold of the engine, the physical parameters allowing determination of the air mass M (64 - 74) in a cylinder during the period of combustion of another cylinder, and the pumping torque Cp (64 - 78) necessary for doing this,

- storing (62 - 72) the values of these physical parameters or those of the values M and Cp, during the two following periods of combustion,

- combining (68-86) the data thus stored in order to produce a term $H_{n'}$ of correction of the torque $Cg_{n'}$ pertaining to the period of combustion of rank n according the relationship $H_{n'} - \delta(M_{n'} - 2 + M_{n'-1}) + \alpha CP_{(n'-2)}$, wherein $\delta$ and $\alpha$ are constants depending on the type of engine;

- calculating (68) the corrected average gas torque generated during the period of combustion of rank n, according to the relationship $Cg_{cn'} = h \cdot Cg_{n'} + H_{n'}$, wherein h is a calibration constant depending on the type of engine.

**13.** Method according to claim 12, **characterised in that**:

- determining the air mass M consists of measuring (60) the pressurc pc in the air intake manifold of the engine and of calculating (64) M according to the relationship $M = pc \cdot R_N$ wherein $R_N$ is the coefficient, substantially constant according to the speed N of the engine, of filling of the engine cylinders,

- determining the pumping torque Cp consists of measuring (58) the atmospheric pressure Pa and of calculating (64) Cp according to the relationship Cp = (Pc - Pa).

**14.** Method according to claim 12, **characterised in that**:

- determining the air mass M consists of measuring (70) the mass flow rate Da of air in the manifold and of calculating (74) M according to the relationship $M = Da \cdot T$, wherein T is the period of combustions,

- determining the pumping torque Cp consists of calculating (78) Cp according to the relationship Cp = (Da·T - $M_0$) wherein $M_0$ is the air mass introduced into a cylinder with a fully open valve.

**15.** Method according to one of claims 12, 13, 14 **characterised in that** the term D of the relationship defining Cg is obtained by implementing the following steps:

- establishing a measurement horizon at least equal to the angular interval between two consecutive explosions in the engine and dividing this measurement horizon into a relatively small number of packets of markers;

- calculating (36) the durations of passing of each of these packets in front of the sensor (22) and providing them with a rank in each measurement horizon.

- combining together by addition and subtraction (46) a given number of durations having established ranks such as to produce a value Q having an average value of zero, and a non-zero frequency response to the frequency of analysis of the engine explosions;

- determining a weighting constant p such that the term $D = p \cdot Q$ obtained by a simplified calculation has a frequency response at least for said frequency of analysis and for the combination of durations retained in order to express Q, substantially identical to that obtained for a term

$$\sum_{0}^{n-1} d_i \cdot \cos(i \cdot 2\Pi/n).$$

**16.** Method according to claim 15, **characterised in that** the angular value of each packet of markers is $\Pi/6$.

**17.** Method according to claim 15, **characterised in that** in order to produce a term $D_c = p \text{-} Q_c$ corrected with respect to the low frequency interference affecting the engine, each packet of markers measures $\Pi/6$, the constant $p = \Pi/2\sqrt{3}$ and the value of the term Q thus corrected is $Q_c = 2du_0 - du_{-1} - du_2 - du_3 - du_{+1} + 2du_5$) with $du_{-1}$ and $du_{+1}$, the respective durations of passing of the packets, arranged at a given moment on either side of said angular interval.

**18.** Device for producing a digital value Cg representative of the average gas torque generated by each combustion of the gas mixture in the cylinders of a combustion engine operating at low speed,

- said engine comprising:

- measurement markers (14, 16) arranged on a crown (12) integral with the flywheel or the crankshaft,

- means (18, 20) for defining at least indexing reference of the markers;

- a sensor (22) of the passing of the markers (14, 16) mounted in a fixed manner in the proximity of the crown (12);

- said device comprising:

- calculating means (30) for producing a primary digital value $d_i$ representative of the momentary duration of passing in front of the sensor (22) of each of the markers (14, 16);

- calculating means (42) for forming from primary digital values $d_i$ a first secondary digital value T representative of the total duration of passing in front of the sensor (22) of each series of n markers defining the angular interval separating two consecutive combustions in the engine;

- calculating means (46) for forming a second digital value D representative of the projection on the marker phase reference line (18, 20) corresponding to the origin of the angular periods of the combustions, from the amplitude of the alternative component of the momentary durations $d_i$ of passing of the markers (14, 16) in front of the sensor (22) to the frequency of the combustions in the engine;

- calculating means (54) for forming the digital value Cg sought from the relationship $Cg = A \cdot D/T^3 + B/T^2$ in which A and B are constants determined experimentally, contained in a memory (56);

- said device being **characterised in that** it also comprises:

- processing and calculating means (36) for establishing a measurement horizon at least equal to said angular interval in order to collect the momentary durations $d_i$ of passing of the markers included in this measurement horizon into a relatively small number of durations $du_0,..., du_n$ of passing of packets of markers and for identifying these durations du by their rank (0 ... n) in each measurement horizon;

- calculating means (46) for combining together by addition and subtraction, a given number of durations of packets having established ranks, such as to produce a value Q having an average value of zero and a non-zero frequency response to the frequency of analysis of the engine explosions;

- calculating means (50) for producing a term $D = p \cdot Q$ from the value Q previously calculated and a weighting coefficient p determined experimentally and stored in a memory (52), the value of p and the combination of durations retained in order to express Q having been determined such that the term D thus obtained by a simplified calculation has a frequency response at least for said frequency of analysis, identical to that obtained for the term:

$$\sum_{0}^{n-1} d_i \cdot \cos(i \cdot 2\Pi/n).$$

19. Device according to claim 18 for producing a first digital value Cg representative of the average gas torque generated by each combustion of the gas mixture in the cylinders of a combustion engine functioning at low speed, and a second digital value $\delta Cg$ representative of the variations in the resistant torque applied to such an engine comprising two or four cylinders, said device; in order to produce said second value $\delta Cg$ being **characterised in that** it also comprises:

- processing and calculating means (36) for constituting a measurement horizon at least equal to the angular interval between two consecutive explosions in the engine, in order to collect the momentary durations $d_i$ of

passing of the markers included in this measurement horizon into a relatively small number of durations $du_0$, ..., $du_n$, of passing of packets of markers in order to identify these durations du by their rank 0 ... n, in each measurement horizon during analysis, the angular values of the packets of markers of durations of rank 0 and n being equal;

- means (38) for storing the durations $du_0$, ..., $du_n$, as well as on the one hand the duration of the last packet of markers of the last measurement horizon previously analysed and assigning thereto the reference $du_{-1}$, and on the other hand the duration of the first packet of markers of the next measurement horizon analysed and assigning thereto the reference $du_{+1}$;

- means (47) for producing a term q according to the relationship $q = (du_0 - du_{-1} + du_n, - du_{+1})$;

- means (55) for forming the term $\delta Cg$ sought according to the relationship $\delta Cg = a \cdot q \cdot A/T^3$, in which a is a constant depending upon the angular value of the four packets of markers concerned.

20. Device according to any one of claims 18 to 19 for producing a digital value Cg representative of the average gas torque generated by each combustion of the gas mixture in the four cylinders of a four-stroke combustion engine functioning at low speed, said value being corrected with respect to the effects of particular conditions these combustions, **characterised in that** it also comprises:

- means (60-62-64 or 70-72-74) including sensors (60 - 70) installed in the air intake manifold in order to determine the air mass M pumped into a cylinder during the period of combustion of another cylinder,

- means (58-60-62-64 or 70-72-78) for determining the pumping torque Cp necessary to do this;

- means for storing (62 or 72-76-82) the data M and Cp or the constituent elements of these data during the two following periods of combustion,

- means (64 or 86) for combining these data or their constituent elements in order to produce a term $H_{n'}$ of correction of the torque $Cg_{n'}$ pertain to the same period of combustion of rank n according to the relationship: $H_{n'} = -\delta \cdot (M_{n'-2} + M_{n'-1}) + \alpha \cdot Cp_{(n'-2)}$ in which $\delta$ and $\alpha$ are constants depending upon the type of engine,

- calculating means (68) for calculating the corrected average gas torque generated during the period of combustion of rank n' according to the relationship:
$Cg_{cn'} = h \cdot Cg_{n'} + H_{n'}$, wherein h is a calibration constant depending upon the type of engine

- the constants $\delta$, $\alpha$ and h being stored in a permanent memory (66 or 84).


**Patentansprüche**

1. Verfahren zur Erzeugung eines numerischen Werts Cg, der repräsentativ ist für das mittlere Gasmoment, das von jeder Verbrennung des Gasgemisches in den Zylindern einer Wärmekraftmaschine erzeugt wird, umfassend:

- Messmarkierungen (14, 16), die an einem Kranz (12) angeordnet sind, der fest mit dem Schwungrad des Motors oder seiner Kurbelwelle verbunden ist;

- Mittel (18, 20), um mindestens eine Referenz zur Indexierung der Markierungen zu definieren;

- einen Sensor (22) für das Vorbeilaufen der Markierungen (14, 16), der fix in der Nähe des Kranzes (12) montiert ist;

- wobei das Verfahren darin besteht:

- einen primären numerischen Wert $d_i$ zu erzeugen (26, 30), der repräsentativ ist für die momentane Zeitspanne des Vorbeilaufens jeder Markierung (14, 16) vor dem Sensor (22);

- ausgehend von den primären numerischen Werten $d_i$ einen ersten sekundären numerischen Wert T zu ermitteln (42), der repräsentativ ist für die Gesamtdauer des Vorbeilaufens vor dem Sensor (22) jeder Serie von n Markierungen, die das Winkelintervall der Verbrennungen im Motor definieren;

- einen zweiten sekundären numerischen Wert D zu ermitteln (46), der repräsentativ ist für die Projektion auf die Phasenreferenzlinie der Markierungen (18, 20), entsprechend dem Nullpunkt der Winkelperioden der Verbrennungen, der Amplitude der alternierenden Komponente der momentanen Zeitspannen $d_i$ des Vorbeilaufens der Markierungen (14, 16) vor dem Sensor (22) bei der Frequenz der Verbrennungen im Motor;

- den gesuchten numerischen Wert Cg ausgehend von der Beziehung $Cg = A.D/T^3 + B/T^2$ zu ermitteln (54), wobei A und B (56) experimentell bestimmte Konstanten sind;

- wobei das Verfahren **dadurch gekennzeichnet ist, dass** es darüber hinaus darin besteht,

- einen Vermessungshorizont zu erstellen (36), der mindestens gleich ist dem Winkelintervall zwischen zwei aufeinanderfolgenden Explosionen im Motor;

- die momentanen Zeitspannen $d_i$ des Vorbeilaufens der in diesem Vermessungshorizont enthaltenen Markierungen in eine relativ kleine Anzahl von Zeitspannen $du_0$, ..., $du_n$ des Vorbeilaufens von Markierungspaketen zu gruppieren (36) und diese Zeitspannen du durch ihren Rang 0 ... n in jedem gerade analysierten Vermessungshorizont zu identifizieren;

- durch Addition und Subtraktion (46), eventuell gewichtet, eine gegebene Anzahl von Zeitspannen mit bestimmten Rängen miteinander zu kombinieren, um eine Größe Q zu erzeugen, die bei der Analysefrequenz der Explosionen des Motors einen Mittelwert von null und eine Frequenzcharakteristik von nicht null aufweist;

- eine solche Gewichtungskonstante p zu bestimmen, dass der Term D = p.Q, der durch eine vereinfachte Berechnung erzielt wird, zumindest für die Analysefrequenz und für die Kombination der Zeitspannen, die verwendet wurde, um Q auszudrücken, eine Frequenzcharakteristik aufweist, die annähernd identisch ist mit jener, die für folgenden Term erzielt wird:

$$D = \sum_{0}^{(n-1)} d_i . \cos(i.2\pi / n)$$

2. Verfahren gemäß Anspruch 1, **dadurch gekennzeichnet, dass**

- die Zahl der Pakete, die in einem Vermessungshorizont enthalten sind, eine gerade Zahl ist;

- die Winkellängen dieser Pakete gleich sind;

- die Zahl der Zeitspannen von Paketen, die kombiniert werden, um Q zu erzeugen, eine gerade Zahl von mindestens gleich vier ist.

3. Verfahren nach Anspruch 1 oder 2, **dadurch gekennzeichnet, dass** die Frequenzcharakteristik des Terms D = p.Q bis zu vier Mal die Analysefrequenz annähernd identisch mit der ursprünglich erhaltenen ist.

4. Verfahren nach einem der vorhergehenden Ansprüche, **dadurch gekennzeichnet, dass** der Vermessungshorizont außer dem Winkelintervall, das zwei aufeinanderfolgende Explosionen im Motor trennt, eine kleine Zahl von Markierungen umfasst, die zu beiden Seiten dieses Intervalls angeordnet sind.

5. Verfahren nach einem der Ansprüche 1, 3, 4, **dadurch gekennzeichnet, dass** die Markierungspakete eines Vermessungshorizonts nicht von exakt identischen Längen sind.

6. Verfahren nach den Ansprüchen 1 und 2, **dadurch gekennzeichnet, dass**

- der Vermessungshorizont exakt definiert wird durch das Winkelintervall, das zwei Explosionen im Motor trennt;

- die Anzahl der Markierungspakete sechs ist und die sechs gemessenen Zeitspannen mit $du_0$, ..., $du_5$ bezeichnet werden;

- die Größe $Q = (du_0 - du_2 - du_3 + du_5)$ und die Gewichtungskonstante $p = \pi/2\sqrt{3}$, wenn die sechs Pakete die gleiche Winkellänge von $\pi/6$ aufweisen.

7. Verfahren nach Anspruch 1, **dadurch gekennzeichnet, dass**:

- das Intervall zwischen zwei aufeinanderfolgenden Explosionen in sechs Pakete von identischer Winkellänge unterteilt ist;

- der Vermessungshorizont gleich sieben aufeinanderfolgenden Paketen ist, die mit $du_0$, ..., $du_6$ bezeichnet werden;

- für die Größe Q gilt: $Q = du_0 - du_3 + 3/2.(du_6 - du4)$.

8. Verfahren zur Erzeugung eines ersten numerischen Werts Cg, der repräsentativ ist für das mittlere Gasmoment, das durch jede Verbrennung des Gasgemisches in den Zylindem einer Wärmekraftmaschine erzeugt wird, nach einem der Ansprüche 1 bis 7, und eines zweiten numerischen Werts δCg, der repräsentativ ist für die Schwankungen des auf einen Motor mit zwei oder vier Zylindern einwirkenden Widerstandsmoments, wobei das Verfahren zur Erzeugung des zweiten Werts δCg **dadurch gekennzeichnet ist, dass** es darin besteht:

- einen Vermessungshorizont zu erstellen (36), der mindestens gleich ist dem Winkelintervall zwischen zwei aufeinanderfolgenden Explosionen im Motor;

- die momentanen Zeitspannen $d_i$ des Vorbeilaufens der in diesem Vermessungshorizont enthaltenen Markierungen in eine relativ kleine Anzahl von Zeitspannen $du_0$, ..., $du_{n'}$ des Vorbeilaufens von Markierungspaketen zu gruppieren (36) und diese Zeitspannen du durch ihren Rang 0 ... n' in jedem gerade analysierten Vermessungshorizont zu identifizieren, wobei die Winkelwerte der Pakete der Zeitspannen mit den Rängen 0 und n' gleich sind;

- der Zeitspanne des letzten Markierungspakets des letzten, vorher analysierten Vermessungshorizonts das Bezugszeichen $du_{-1}$ und der Zeitspanne des ersten Markierungspakets des nächsten analysierten Vermessungshorizonts das Bezugszeichen $du_{+1}$ zuzuweisen (38-40);

- vier dieser Zeitspannen du gemäß einer Beziehung $q = (du_0 - du_{-1} + du_{n'} - du_{+1})$ zu kombinieren (47);

- den gesuchten Term δCg gemäß der Beziehung $\delta Cg = a.q.A/T^3$ zu ermitteln (55), wobei a eine neue Konstante ist, die vom Winkelwert der vier betroffenen Markierungspakete abhängt.

9. Verfahren nach Anspruch 8, **dadurch gekennzeichnet, dass**:

- der Vermessungshorizont exakt definiert wird durch das Winkelintervall, das zwei Explosionen im Motor trennt;

- die Zahl der Markierungspakete im Vermessungshorizont sechs ist und der Winkelwert jedes Pakets $\pi/6$ ist;

- die Konstante $a = \pi/2\sqrt{3}$.

10. Verfahren nach Anspruch 8, **dadurch gekennzeichnet, dass**, da das Winkelintervall der Markierungspakete mit den Zeitspannen, die mit $du_0$ und $du_{n'}$ bezeichnet werden, relativ groß ist, um einen genaueren Term δCg zu erzeugen, die Vermessungshorizonte eine leichte Phasenvorverschiebung gegenüber den Intervallen der oberen Totpunkte des Motors aufweisen.

11. Verfahren nach den Ansprüchen 6 und 8, **dadurch gekennzeichnet, dass** zur Erzeugung eines Terms Q, der um die niederfrequenten Störungen berichtigt ist, die durch die Schwankungen des Widerstandsmoments erzeugt werden, das auf den Motor einwirkt, dieser Term gemäß folgender Beziehung berechnet (50) wird:

$$Q_c = (Q + q) = (2du_0 - du_{-1} - du_2 - du_3 - du_{+1} + 2du_5).$$

**12.** Verfahren zur Erzeugung eines numerischen Werts $Cg_c$, der repräsentativ ist für das mittlere Gasmoment, das durch jede Verbrennung des Gasgemisches in den vier Zylindern einer Wärmekraftmaschine erzeugt wird, gemäß einem der Ansprüche 1 bis 11, und berichtigt um die Einflüsse der besonderen Bedingungen dieser Verbrennungen, wobei das Verfahren **dadurch gekennzeichnet ist, dass** es auch darin besteht:

- insbesondere im Luftansaugkrümmer des Motors die physikalischen Parameter zu messen (58 - 60 - 70), die es ermöglichen, die Luftmasse M (64 - 74), die im Lauf der Verbrennungsperiode eines anderen Zylinders in einen Zylinder gepumpt wird, sowie das zu diesem Zweck erforderliche Pumpmoment Cp (64 - 78) zu bestimmen;

- die Werte dieser physikalischen Parameter oder jene der Größen M und Cp während der zwei folgenden Verbrennungsperioden zu speichern (62 - 72);

- die auf diese Weise gespeicherten Daten zu kombinieren (68 - 86), um einen Term $H_{n'}$ zur Korrektur des Moments $Cg_{n'}$ zu erzeugen, das zur Verbrennungsperiode des Rangs n gehört, und zwar gemäß der Beziehung $H_{n'} = -\delta.(M_{n'-2} + M_{n'-1}) + \alpha.Cp_{(n'-2)}$, wobei $\delta$ und $\alpha$ vom Motortyp abhängende Konstanten sind;

- das korrigierte mittlere Gasmoment zu berechnen (68), das im Lauf der Verbrennungsperiode des Rangs n erzeugt wird, und zwar gemäß der Beziehung $Cg_{cn'} = h.Cg_{n'} + H_{n'}$, wobei h eine vom Motortyp abhängende Eichkonstante ist.

**13.** Verfahren nach Anspruch 12, **dadurch gekennzeichnet, dass**:

- die Bestimmung der Luftmasse M darin besteht, den Druck Pc im Luftansaugkrümmer des Motors zu messen (60) und M gemäß der Beziehung $M = Pc.R_N$ zu berechnen (64), wobei $R_N$ der Füllungsgrad der Zylinder des Motors ist, der in Abhängigkeit von der Geschwindigkeit N des Motors annähernd konstant ist;

- die Bestimmung des Pumpmoments Cp darin besteht, den Luftdruck Pa zu messen (58) und Cp gemäß der Beziehung $Cp = (Pc - Pa)$ zu berechnen (64).

**14.** Verfahren nach Anspruch 12, **dadurch gekennzeichnet, dass**:

- die Bestimmung der Luftmasse M darin besteht, den Massendurchsatz Da der Luft im Krümmer zu messen (70) und M gemäß der Beziehung $M = Da.T$ zu berechnen (74), wobei T die Periode der Verbrennungen ist;

- die Bestimmung des Pumpmoments Cp dann besteht, Cp gemäß der Beziehung $Cp = (Da.T - M_0)$ zu berechnen (78), wobei $M_0$ die Luftmasse ist, die in einen Zylinder bei voll geöffneter Drosselklappe eingeführt wird.

**15.** Verfahren nach einem der Ansprüche 12, 13, 14, **dadurch gekennzeichnet, dass** der Term D der Beziehung, die Cg definiert, durch die Anwendung folgender Schritte erzielt wird:

- einen Vermessungshorizont erstellen, der mindestens gleich ist dem Winkelintervall zwischen zwei aufeinanderfolgenden Explosionen im Motor, und diesen Vermessungshorizont in eine relativ kleine Anzahl von Markierungspaketen teilen;

- die Zeitspannen des Vorbeilaufens jedes dieser Pakete vor dem Sensor (22) berechnen (36) und ihnen einen Rang in jedem Vermessungshorizont zuweisen;

- durch Addition und Subtraktion (46) eine gegebene Anzahl von Zeitspannen mit bestimmten Rängen miteinander kombinieren, so dass eine Größe Q erzeugt wird, die bei der Analysefrequenz der Explosionen des Motors einen Mittelwert von null und eine Frequenzcharakteristik von nicht null aufweist;

- eine solche Gewichtungskonstante p bestimmen, dass der Term D = p.Q, der durch eine vereinfachte Berechnung erzielt wird, zumindest für die Analysefrequenz und für die Kombination der Zeitspannen, die verwendet wurde, um Q auszudrücken, eine Frequenzcharakteristik aufweist, die annähernd identisch ist mit jener, die für folgenden Term erzielt wird:

$$\sum_{0}^{(n-1)} d_i.\cos(i.2\pi/n)$$

16. Verfahren nach Anspruch 15, **dadurch gekennzeichnet, dass** der Winkelwert jedes Markierungspaktes $\pi/6$ ist.

17. Verfahren nach Anspruch 15, **dadurch gekennzeichnet, dass** zur Erzeugung eines Terms $D_c = p.Q_c$, der um die niederfrequenten Störungen berichtigt ist, die auf den Motor einwirken, jedes Markierungspaket $\pi/6$ misst, die Konstante p gleich $\pi/2\sqrt{3}$ ist und der Wert des auf diese Weise korrigierten Werts Q folgender ist: $Q_c = (2du_0 - du_{-1} - du_2 - du_3 - du_{+1} + 2du_5)$, wobei $du_{-1}$ und $du_{+1}$ die jeweiligen Zeitspannen des Vorbeilaufens der Pakete sind, die zu einem gegebenen Zeitpunkt an der einen und der anderen Seite des Winkelintervalls angeordnet sind.

18. Vorrichtung zur Erzeugung eines numerischen Werts Cg, der repräsentativ ist für das mittlere Gasmoment, das durch jede Verbrennung des Gasgemisches in den Zylindern einer Wärmekraftmaschine erzeugt wird, die mit niedriger Drehzahl betrieben wird,

- wobei der Motor umfasst:

  - Messmarkierungen (14, 16), die an einem Kranz (12) angeordnet sind, der fest mit dem Schwungrad oder der Kurbelwelle verbunden ist;

  - Mittel (18, 20), um mindestens eine Referenz zur Indexierung der Markierungen zu definieren;

  - einen Sensor (22) für das Vorbeilaufen der Markierungen (14, 16), der fix in der Nähe des Kranzes (12) montiert ist;

- wobei die Vorrichtung umfasst:

  - Rechenmittel (30), um einen primären numerischen Wert $d_i$ zu erzeugen, der repräsentativ ist für die momentane Zeitspanne des Vorbeilaufens jeder Markierung (14, 16) vor dem Sensor (22);

  - Rechenmittel (42), um ausgehend von den primären numerischen Werten $d_i$ einen ersten sekundären numerischen Wert T zu ermitteln, der repräsentativ ist für die Gesamtdauer des Vorbeilaufens vor dem Sensor (22) jeder Serie von n Markierungen, die das Winkelintervall definiert, das zwei aufeinanderfolgende Verbrennungen im Motor trennt;

  - Rechenmittel (46), um einen zweiten sekundären numerischen Wert D zu ermitteln, der repräsentativ ist für die Projektion auf die Phasenreferenzlinie der Markierungen (18, 20), entsprechend dem Nullpunkt der Winkelperioden der Verbrennungen, der Amplitude der alternierenden Komponente der momentanen Zeitspannen $d_i$ des Vorbeilaufens der Markierungen (14, 16) vor dem Sensor (22) bei der Frequenz der Verbrennungen im Motor;

  - Rechenmittel (54), um den gesuchten numerischen Wert Cg ausgehend von der Beziehung $Cg = A.D/T^3 + B/T^2$ zu ermitteln, wobei A und B experimentell bestimmte Konstanten sind, die in einem Speicher (56) enthalten sind;

- wobei die Vorrichtung **dadurch gekennzeichnet ist, dass** sie auch umfasst:

  - Verarbeitungs- und Rechenmittel (36), um einen Vermessungshorizont zu erstellen, der mindestens gleich ist dem genannten Winkelintervall, um die momentanen Zeitspannen di des Vorbeilaufens der in diesem Vermessungshorizont enthaltenen Markierungen in eine relativ kleine Anzahl von Zeitspannen $du_0$, ..., $du_n$ des Vorbeilaufens von Markierungspaketen zu gruppieren und um diese Zeitspannen du durch ihren Rang (0 ... n) in jedem Vermessungshorizont zu identifizieren;

- Rechenmittel (46), um durch Addition und Subtraktion eine gegebene Anzahl von Zeitspannen von Paketen mit bestimmten Rängen miteinander zu kombinieren, um eine Größe Q zu erzeugen, die bei der Analysefrequenz der Explosionen des Motors einen Mittelwert von null und eine Frequenzcharakteristik von nicht null aufweist;

- Rechenmittel (50), um einen Term D = p.Q ausgehend vom vorher berechneten Wert Q und von einem Gewichtungskoeffizienten p zu erzeugen, der experimentell bestimmt und in einem Speicher (52) gespeichert ist, wobei der Wert von p und die Kombination der Zeitspannen, die verwendet wurde, um Q auszudrücken, so bestimmt wurden, dass der Term D, der auf diese Weise durch eine vereinfachte Berechnung erzielt wird, zumindest für die Analysefrequenz eine Frequenzcharakteristik aufweist, die identisch ist mit jener, die für folgenden Term erzielt wird:

$$\sum_{0}^{(n-1)} d_i . \cos(i.2\pi / n)$$

19. Vorrichtung nach Anspruch 18 zur Erzeugung eines ersten numerischen Werts Cg, der repräsentativ ist für das mittlere Gasmoment, das durch jede Verbrennung des Gasgemisches in den Zylindern einer Wärmekraftmaschine erzeugt wird, die mit niedriger Drehzahl betrieben wird, und eines zweiten numerischen Werts $\delta$Cg, der repräsentativ ist für die Schwankungen des auf einen derartigen Motor mit zwei oder vier Zylindern einwirkenden Widerstandsmoments, wobei die Vorrichtung zur Erzeugung des zweiten Werts $\delta$Cg **dadurch gekennzeichnet ist, dass** sie auch umfasst:

- Verarbeitungs- und Rechenmittel (36), um einen Vermessungshorizont zu erstellen, der mindestens gleich ist dem Winkelintervall zwischen zwei aufeinanderfolgenden Explosionen im Motor, um die momentanen Zeitspannen $d_i$ des Vorbeilaufens der in diesem Vermessungshorizont enthaltenen Markierungen in eine relativ kleine Anzahl von Zeitspannen $du_0$, ..., $du_{n'}$ des Vorbeilaufens von Markierungspaketen zu gruppieren und um diese Zeitspannen du durch ihren Rang 0 ... n' in jedem gerade analysierten Vermessungshorizont zu identifizieren, wobei die Winkelwerte der Markierungspakete mit den Zeitspannen der Ränge 0 und n' gleich sind;

- Mittel (38) zum Speichern der Zeitspannen $du_0$, ..., $du_{n'}$ sowie einerseits der Zeitspanne des letzten Markierungspakets des letzten, vorher analysierten Vermessungshorizonts, wobei diesem das Bezugszeichen $du_{-1}$ zugewiesen wird, und andererseits der Zeitspanne des ersten Markierungspakets des nächsten analysierten Vermessungshorizonts, wobei diesem das Bezugszeichen $du_{+1}$ zugewiesen wird;

- Mittel (47), um einen Term q gemäß der Beziehung q = ($du_0$ - $du_{-1}$ + $du_{n'}$ - $du_{+1}$) zu kombinieren;

- Mittel (55), um den gesuchten Term $\delta$Cg gemäß der Beziehung $\delta$Cg = a.q.A/$T^3$ zu ermitteln, wobei a eine neue Konstante ist, die vom Winkelwert der vier betroffenen Markierungspakete abhängt.

20. Vorrichtung nach einem der Ansprüche 18 bis 19 zur Erzeugung eines numerischen Werts Cg, der repräsentativ ist für das mittlere Gasmoment, das durch jede Verbrennung des Gasgemisches in den Zylindern einer Wärmekraftmaschine mit vier Takten erzeugt wird, die mit niedriger Drehzahl betrieben wird, wobei der Wert um die Einflüsse der besonderen Bedingungen dieser Verbrennungen berichtigt ist, **dadurch gekennzeichnet, dass** sie auch umfasst:

- Mittel (60 - 62 - 64 oder 70 - 72 - 74), die Sensoren (60 - 70) einschließen, die im Luftansaugkrümmer installiert sind, um die Luftmasse M zu bestimmen, die im Lauf der Verbrennungsperiode eines anderen Zylinders in einen Zylinder gepumpt wird;

- Mittel (58 - 60 - 62 - 64 oder 70 - 72 - 78), um das zu diesem Zweck notwendige Pumpmoment Cp zu bestimmen;

- Mittel (62 oder 72-76-82), um die Daten M und Cp oder die konstituierenden Elemente dieser Daten während der beiden folgenden Verbrennungsperioden zu speichern;

- Mittel (64 oder 86), um diese Daten oder deren konstituierende Elemente zu kombinieren, um einen Term $H_{n'}$

zur Korrektur des Moments $Cg_{n'}$ zu erzeugen, das zur Verbrennungsperiode des Rangs n' gehört, und zwar gemäß der Beziehung:

$H_{n'} = -\delta.(M_{n'-2} + M_{n'-1}) + \alpha.Cp_{(n'-2)}$, wobei $\delta$ und $\alpha$ vom Motortyp abhängende Konstantensind;

- Rechenmittel (68), um das korrigierte mittlere Gasmoment zu berechnen, das im Lauf der Verbrennungsperiode des Rangs n' erzeugt wurde, und zwar gemäß der Beziehung:

$Cg_{cn'} = h.Cg_{n'} + H_{n'}$, wobei h eine vom Motortyp abhängende Eichkonstante ist,

- wobei die Konstanten $\delta$, $\alpha$ und h in einem Permanentspeicher (66 oder 84) gespeichert sind.

FIG. 1

**12**
**20**
**18**
**14**
**16**

**22** CAPTEUR
**24**
**26** MISE EN FORME
**28**
**30** MESURE $d_i$ ET RANG
**32** HORLOGE
$d_i$
**34** MEMOIRE TAMPON
**36** MESURE $du$ ET RANG
$du$
**38** MEMOIRE TAMPON
**40** LOGIQUE DE TRANSFERT

**56** MEMOIRE A, B, Fr
**(56)** A
**(44)** T
**54** CALCUL $Cg_c$
**44** MEMOIRE TAMPON
**42** CALCUL T
**10** CALCUL $\delta Cg$
**55**
**52** $a$
**48** $q$
**47** CALCUL $q = \delta u$
**46** CALCUL Q
**52** MEMOIRE $\rho, a$
**50** CALCUL Dc
**48** MEMOIRE TAMPON

EP 0 775 302 B1

FIG. 2

EP 0 775 302 B1

EP 0 775 302 B1

n° de dent

14 12 10 8 6 5 4 2 | 0 2 4 6 8 10 12 14 16 18 20 22 24 26 28 30 32 34 36 38 40
13 11 9 7 5 3 1 1 3 5 7 9 11 13 15 17 19 21 23 25 27 29 31 33 35 37 39 41

I  SIMPLIFICATION : Q

$du_0$  $du_1$  $du_2$  $du_3$  $du_4$  $du_5$

SIMPLIFICATION +
CORRECTION : $Q_C$

II

$du_{-1}$  $du_0$  $du_1$  $du_2$  $du_3$  $du_4$  $du_5$  $du_{+1}$

EVOLUTIONS POSSIBLES

CORRECTION SUR
7 et 6 dents
$Q'_C$

III

$du_{-1}$  $du_0$  $du_1$  $du_2$  $du_3$  $du_4$  $du_5$  $du_{+1}$

PAQUETS
INTERMEDIAIRE DE
DUREE NULLE

$Q'$

IV

$du_0$  $du_1$  $du_2$  $du_3$

FIG. 3

FIG.4

FIG. 5

EP 0 775 302 B1